# EUROPEAN PATENT APPLICATION

(11) **EP 2 246 774 A1**
(43) Date of publication of application: **03.11.2010**
(21) Application number: 09710295.8
(22) Date of filing: 10.02.2009
(51) Int. Cl.: G06F 3/048

(54) **CONTENT DISPLAY PROCESSING DEVICE, CONTENT DISPLAY PROCESSING METHOD, AND CONTENT DISPLAY PROCESSING PROGRAM**

(30) Priority: 12.02.2008 JP 2008031069
(71) Applicant: Sharp Kabushiki Kaisha, Osaka-shi, Osaka 545-8522 (JP)
(72) Inventor: TERADA, Satoshi, Osaka-shi, Osaka 545-8522 (JP); YAGI, Ryouta, Osaka-shi, Osaka 545-8522 (JP); SAIKI, Kazuhiro, Osaka-shi, Osaka 545-8522 (JP)
(74) Representative: Müller - Hoffmann & Partner
(86) International application number: PCT/JP2009/052224
(87) International publication number: WO 2009/101937

(57) **Abstract**

When a user selects a menu item, content associated with the menu item is displayed without activating an application. Further, the content is displayed in accordance with a layout corresponding to contents of meta-information of the content.

A content display processing device (1) includes: a menu generating section (122) that displays, in a menu display area (42) of a display section, a plurality of user-selectable menu items; a menu selection detecting section (132) that detects a user selection of a menu item from the plurality of menu items displayed; and a content data generating section (128) that displays, in a content display area (43) of the display section, one or more pieces of content associated with the menu item selected, when the user selection is detected.

## Description

### Technical Field

The present invention relates to a content display processing device, a content display processing method, a content display processing program, and a computer-readable storage medium storing the content display processing program, each of which is for displaying content associated with a menu item in response to selection of the menu item by a user.

### Background Art

In recent years, content such as mails, images such as photographs, and homepages on the Internet, has been diversified. Accordingly, a content display processing device capable of processing such content in one terminal has become widespread. In such a content display processing device, a "menu" is often provided. The "menu" is for allowing a user to select an application for processing the content and/or a function to execute the processing. The user uses an input device such as a mouse, and makes a selecting operation on a menu so as to select the application and/or the function that the user desires. By such selection, the user can make an instruction to display the content on a display section of the content display processing device, for example.

In a case where processing is determined in response to selection of the menu item by a user so that the processing corresponds to the selected menu item, the user may not know contents of information in each menu item until an application or the like corresponding to the selected menu item is activated. In order to solve this problem, Patent Document 1 discloses, as a method of controlling display of a menu, a method according to which contents of each menu item is presented to a user. According to this method, in a case where various setting items (i.e. time adjustment of a built-in clock) are displayed as menu items, a specific setting content corresponding to a menu item selected by a user operation is displayed on a part of a display device together with a title of the setting item.

Further, in a case where menu items are hierarchically configured, a user may lose track of a menu item for a current operation. In order to solve this problem, Patent Literature 2 discloses a method used in a case where menu items are hierarchically configured. According to the method, if a user memorizes a figure of a menu item selected in an upper-level layer, the user can reach a target menu item without trial and error when the same operation is to be carried out again. According to this method, a user can easily recognize a structure of a selected menu by using, as an indicating mark, a figure indicative of a content selected in the upper-level layer at the time when a selection is made in a lower hierarchical layer.

### Citation List

Patent Literature 1
   Japanese Patent Application Publication, Tokukaihei, No. 8-63828 A (Publication Date: March 8, 1996)
Patent Literature 2
   Japanese Patent Application Publication, Tokukaihei, No. 9-50361 A (Publication Date: February 18, 1997)

### Summary of Invention

In a method disclosed in Patent Literature 1, when a user selects a menu from menus indicating respective setting items, information on thus selected menu is further displayed. This helps the user to easily understand what can be done by selecting the menu.

In a case where this method is used as a method for controlling display of a menu for activating a plurality of applications for processing content, static information can be displayed as sub-menu items. The static information includes, for example, explanation of processing to be carried out by each application, a function that each application fixedly has (e.g. "new mail creation", "mail reception", etc. in the case of a mail application). However, the method has a problem such that dynamic information (i.e. contents of a body of a mail in the case of a mail application, and a Favorites URL list in the case of a Web browser, etc.) retained by each application cannot be displayed.

In the method disclosed in Patent Literature 2, it is necessary for a user to figure out a correlation between a figure indicative of an upper-level layer and a menu item. This may impair the convenience for the user, which is a problem.

Moreover, in either method disclosed in Patent Literature 1 or Patent Literature 2, a method of displaying contents of each menu item to be selected by a user is standardized. Accordingly, it is not possible to change a display method or an operation method depending on types of data included in each application.

Further, in either method disclosed in Patent Literature 1 or Patent Literature 2, after each application corresponding to a selected menu item is activated, a user operation on the application may further be required. This impairs convenience for a user, which is a problem. For example, in a case where a mail application is activated in response to selection of a menu item, a user can access to mail contents by an additional operation of opening an "incoming mailbox" after activation of the mail application.

In addition, as described above, in recent years, functions of the content display processing device have been diversified. Accordingly, for processing mail transmission/reception, image display, Web browsing, etc., a plurality of different applications are mixedly present in one terminal. However, functions and information to be managed are not uniform for every application. In such a condition, the above problems become more prominent.

The present invention is attained in view of the above problems. An object of the present invention is to provide a content display processing device, a content display processing method, a content display processing program, and a computer-readable storage medium storing the content display processing program, each of which is for displaying, without activating an application, content associated with a menu item in response to selection of the menu item by a user and also for displaying the content in accordance with a layout corresponding to contents of meta-information of the content associated with the menu item.

In order to solve the problems mentioned above, a content display processing device of the present invention includes: menu display instruction means displaying a plurality of user-selectable menu items in a first display area of a display section and detecting a user selection of a menu item from the plurality of user-selectable menu items displayed, the plurality of user-selectable menu items each being associated with one or more pieces of content; and content display instruction means displaying, in a second display area of the display section, one or more pieces of content associated with the menu item selected, when the menu display instruction means detects the user selection.

Further, a content display processing method of the present invention includes: a menu display and instruction step of displaying a plurality of user-selectable menu items in a first display area of a display section and detecting a user selection of a menu item from the plurality of user-selectable menu items displayed, the plurality of user-selectable menu items each being associated with one or more pieces of content; and a content display and instruction step of displaying, in a second display area of the display section, one or more pieces of content associated with the menu item selected, when the menu display instruction means detects the user selection.

According to the configuration described above, it is possible to display, in the first display area of the display section, a menu including a plurality of user-selectable menu items each associated with content. Further, when a user selects any one of the menu items, it is possible to obtain content associated with the selected menu item. Then, the obtained content can be displayed in the second display area of the display section.

Therefore, a user can view content only by selecting a menu item. That is, without activating an application associated with the selected menu item, the user can view, only by selecting the menu item, content that is to be displayed by use of the application associated with the selected menu item.

Therefore, a user can view content by a simple operation. This improves convenience for a user.

### Brief Description of Drawings

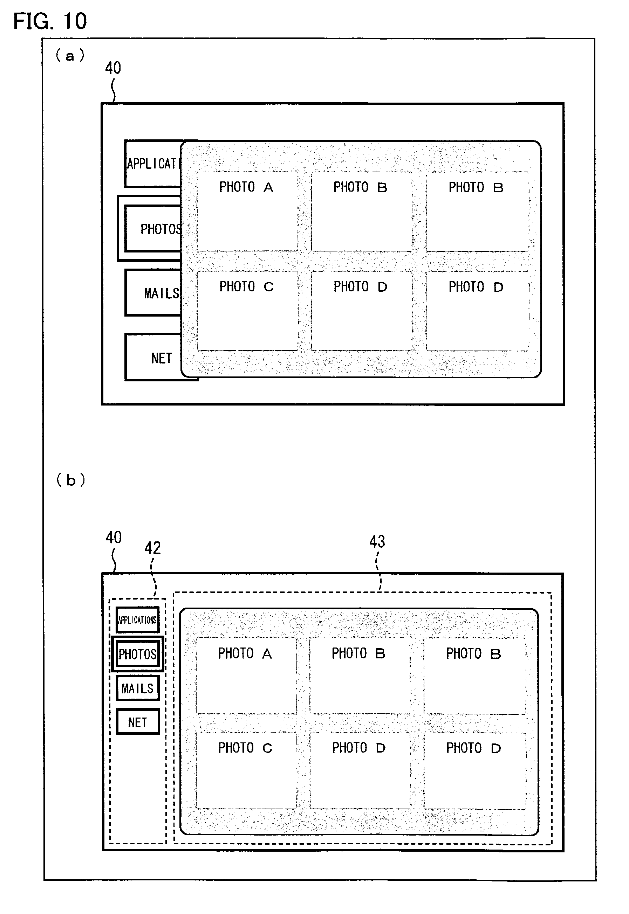

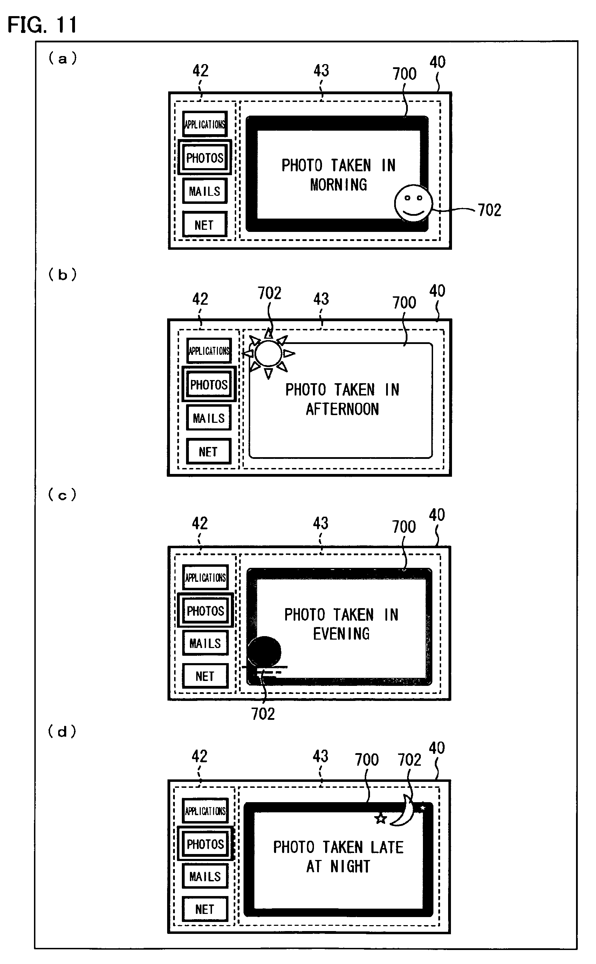

Fig. 1

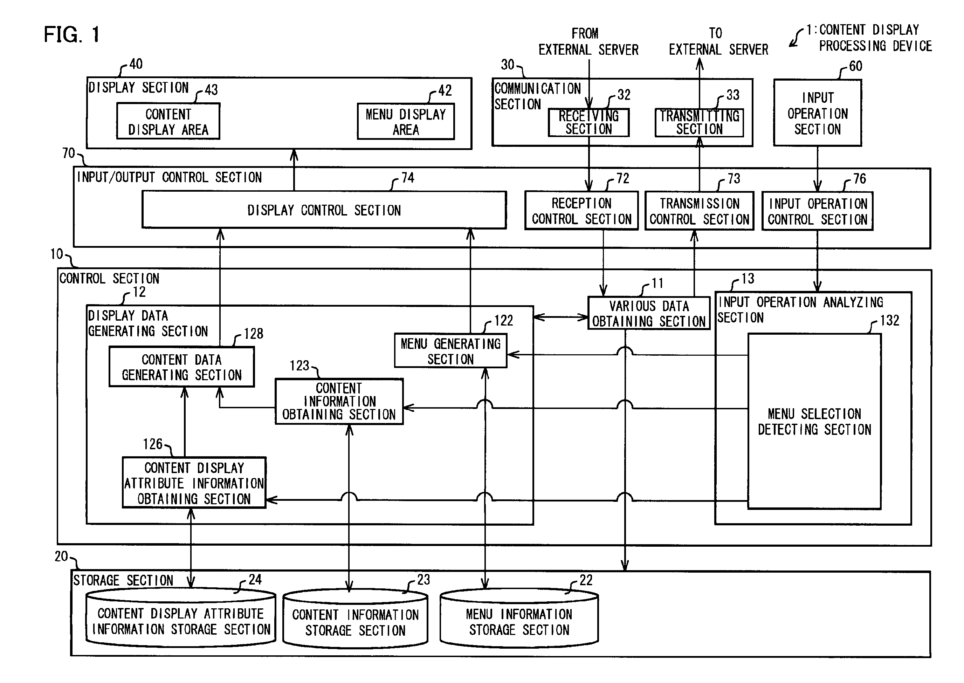

   Fig. 1 is a block diagram schematically illustrating a configuration of a content display processing device according to an embodiment of the present invention.
Fig. 2

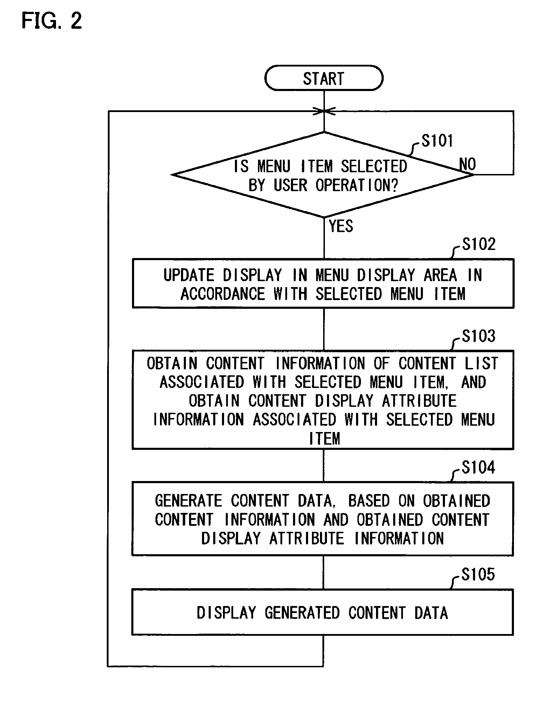

   Fig. 2 is a flow chart illustrating an example of a process flow up to content display carried out, by the content display processing device of Fig. 1, in response to a user menu operation.
Fig. 3

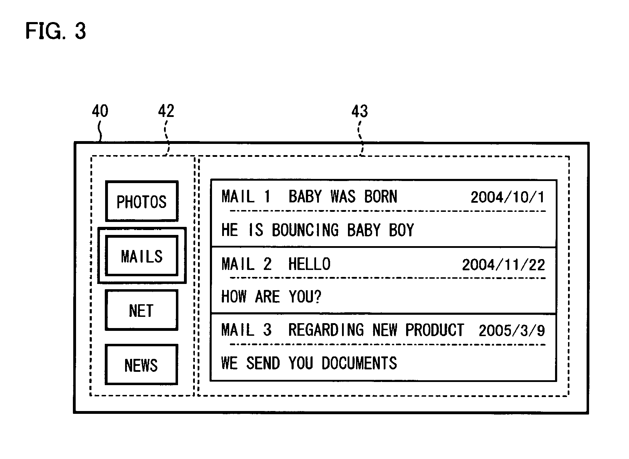

   Fig. 3 is a diagram schematically illustrating an example of a screen that displays content data in response to a menu operation in the content display processing device of Fig. 1.
Fig. 4

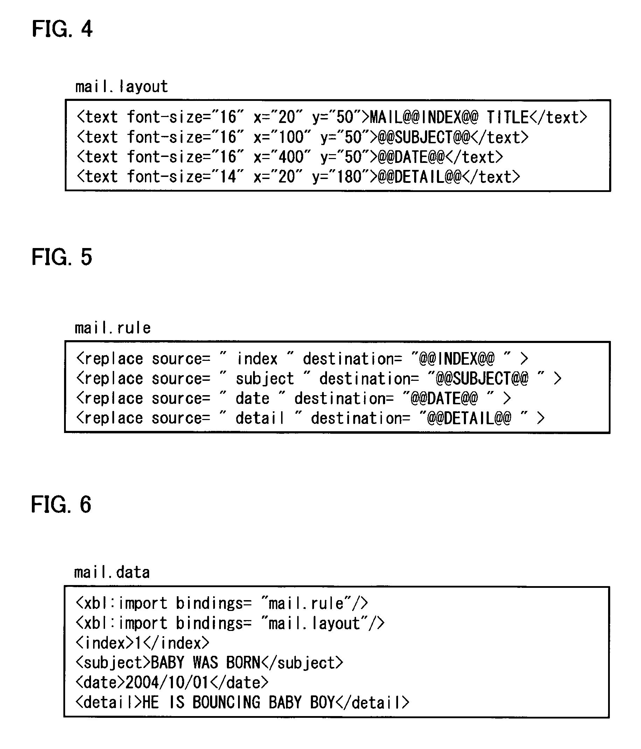

   Fig. 4 is a diagram schematically describing, in the form of XML-format text data, an example of disposition information among display attribute information of content that is to be processed in the content display processing device of Fig. 1.
Fig. 5
   Fig. 5 is a diagram schematically describing, in the form of XML-format text data, an example of displacement information among display attribute information of content that is to be processed in the content display processing device of Fig. 1.
Fig. 6
   Fig. 6 is a diagram schematically describing, in the form of XML-format text data, an example of content information of a mail that is to be processed in the content display processing device of Fig. 1.
Fig. 7

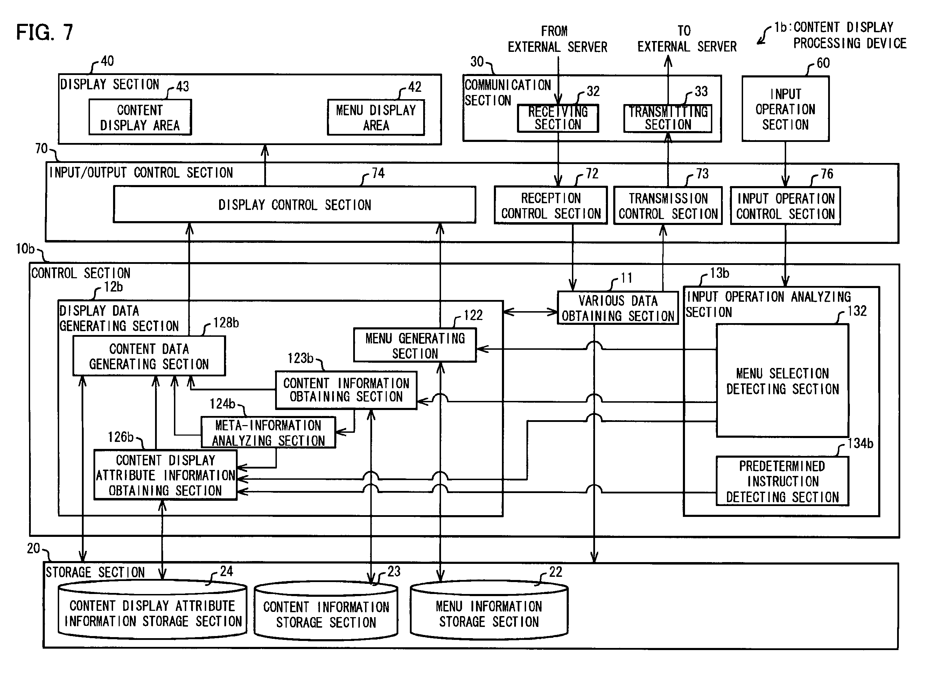

   Fig. 7 is a block diagram schematically illustrating a configuration of a content display processing device according to another embodiment of the present invention.
Fig. 8

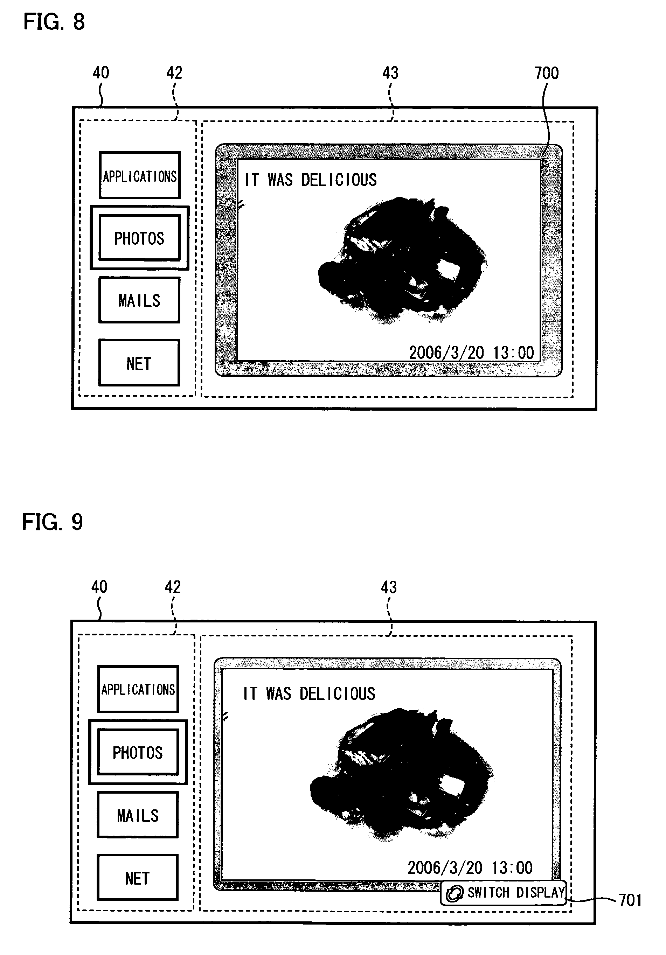

   Fig. 8 is a diagram schematically illustrating a screen that displays content in accordance with image data, in the content display processing device of Fig. 7.
Fig. 9
   Fig. 9 is a diagram schematically illustrating a screen that is obtained by adding a mode switching button to the screen of Fig. 8.
Fig. 10
   (a) of Fig. 10 is a diagram schematically illustrating a screen of a state where a mode of the screen of Fig. 9 is switched to a thumbnail display mode. (b) of Fig. 10 is a diagram schematically illustrating a screen in a state where a size of a menu display area 42 of the screen of (a) of Fig. 10 is reduced so that the menu display area 42 does not overlap the content display area 43.
Fig. 11
   (a) of Fig. 11 is a diagram schematically illustrating a state where content is displayed by the content display processing device of Fig. 7 in accordance with date and hour information accompanying image data, by use of display attribute information including a display frame and an icon each of which is suitable for the morning time. (b) of Fig. 11 is a diagram schematically illustrating a state where content is displayed by the content display processing device of Fig. 7 in accordance with date and hour information accompanying image data, by use of display attribute information including a display frame and an icon each of which is suitable for the afternoon time. (c) of Fig. 11 is a diagram schematically illustrating a state where content is displayed by the content display processing device of Fig. 7 in accordance with date and hour information accompanying image data, by use of display attribute information including a display frame and an icon each of which is suitable for the evening time. (d) of Fig. 11 is a diagram schematically illustrating a state where content is displayed by the content display processing device of Fig. 7 in accordance with date and hour information accompanying image data, by use of display attribute information including a display frame and an icon each of which is suitable for the late-night time.
Fig. 12

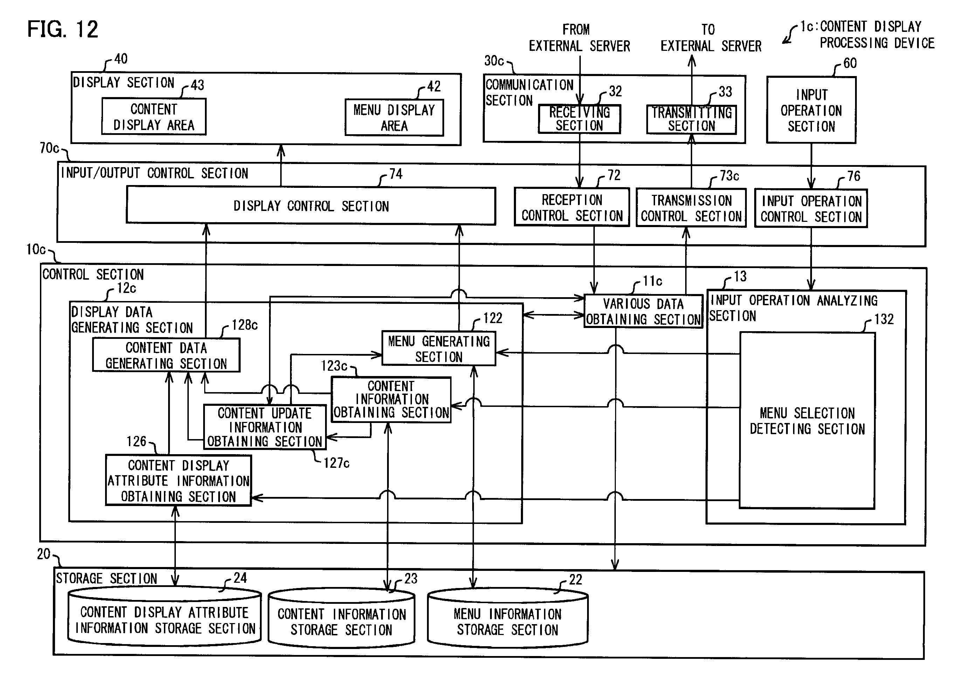

   Fig. 12 is a diagram schematically illustrating a configuration of a content display processing device according to another embodiment of the present invention.
Fig. 13

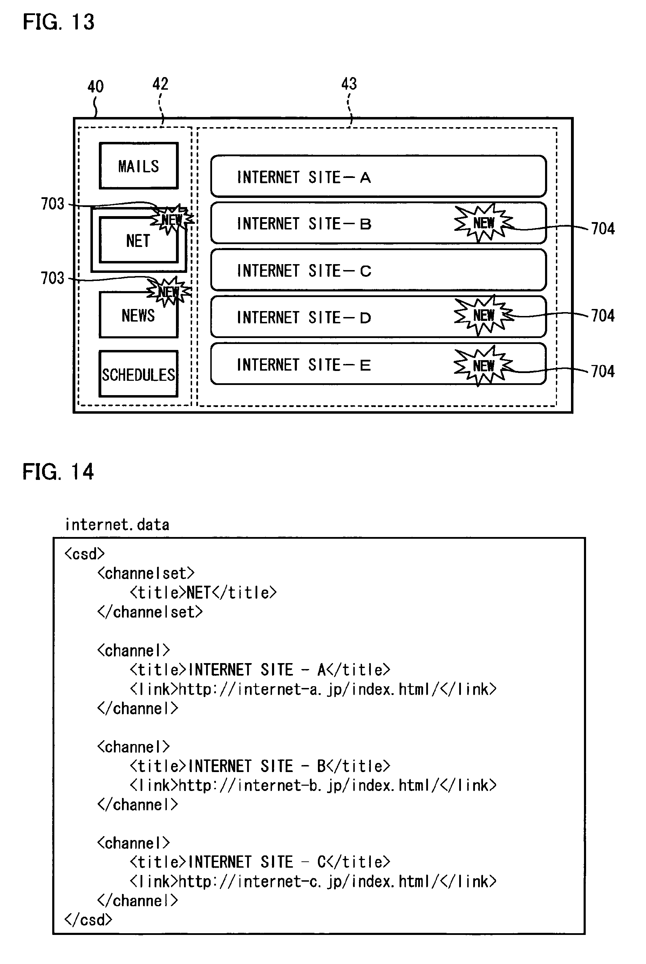

   Fig. 13 is a diagram schematically illustrating a screen that displays content update information, in the content display processing device of Fig. 12.
Fig. 14
   Fig. 14 is a diagram schematically showing a description of XML-format text data including the content shown in Fig. 13.
Fig. 15

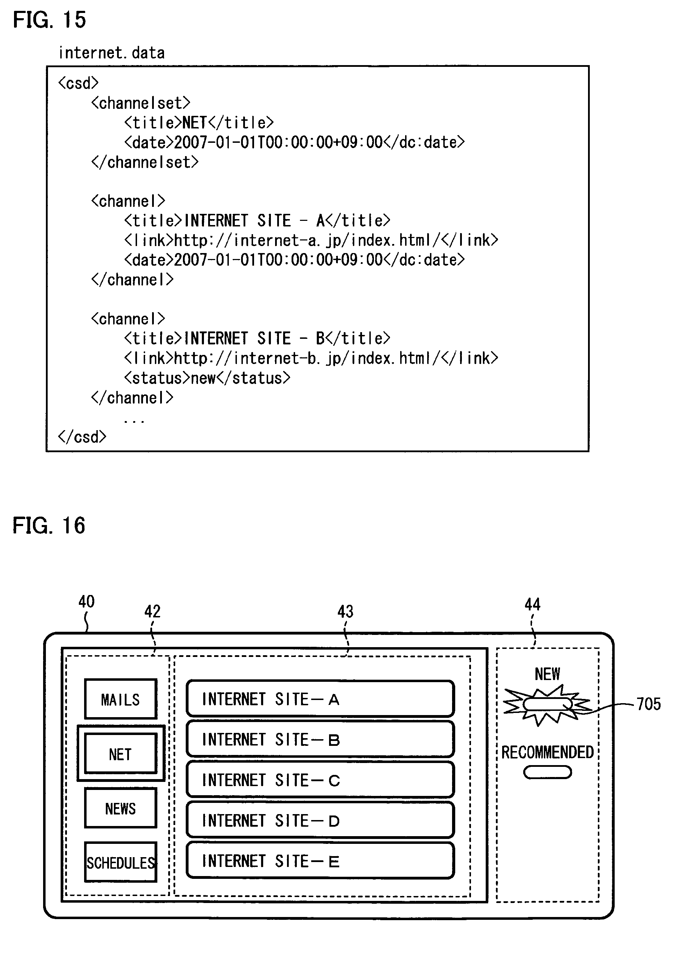

   Fig. 15 is a diagram schematically showing a description of XML-format text data for content that explicitly describes content update information and that is to be processed in the content display processing device of Fig. 12.
Fig. 16
   Fig. 16 is a diagram schematically illustrating an example of a screen that displays information indicating that a menu item or content is updated, in an area that is different from an area for displaying menu items or content in the content display processing device of Fig. 12.
Fig. 17

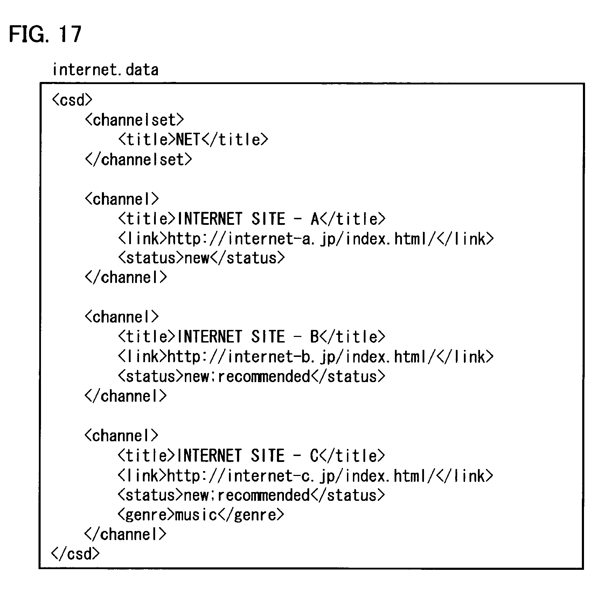

   Fig. 17 is a diagram schematically showing an example of a description of content that includes content information such as recommended information and genre information and that is to be processed in the content display processing device of Fig. 12.
Fig. 18

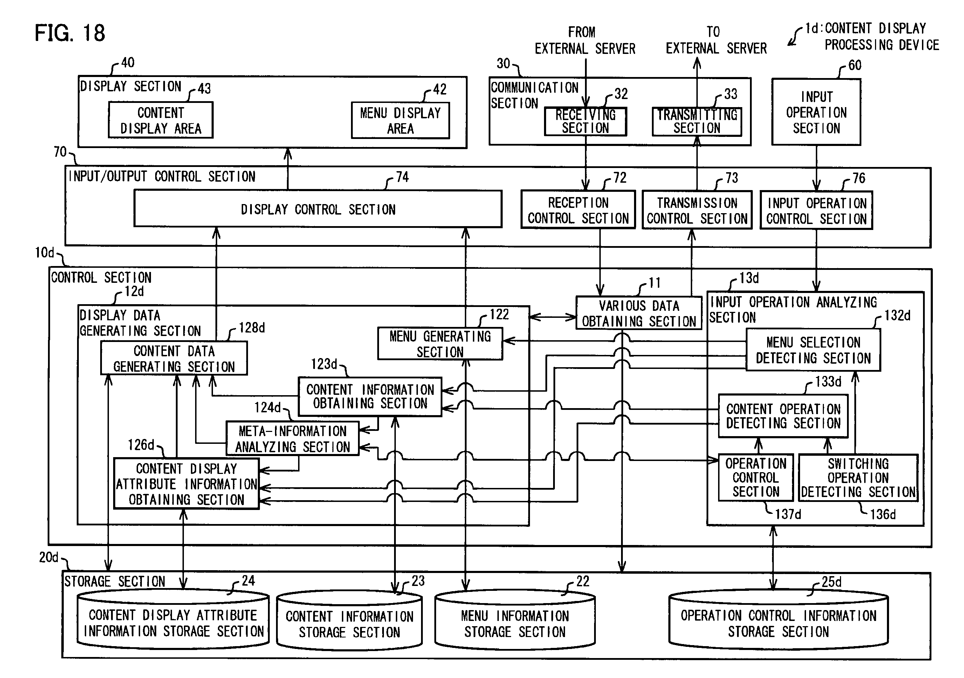

   Fig. 18 is a block diagram schematically illustrating a configuration of a content display processing device of another embodiment of the present invention.
Fig. 19

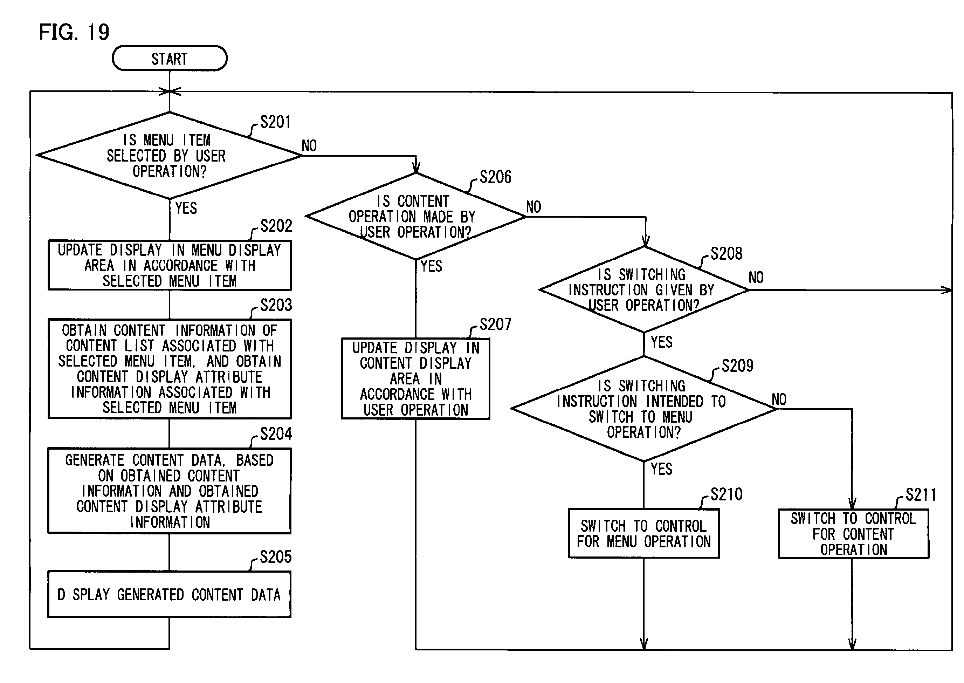

   Fig. 19 is a flow chart illustrating an example of a process flow for switching between a menu operation and a content operation by a user operation, in the content display processing device of Fig. 18.

### Reference Signs List

- 1: Content Display Processing Device
- 1b: Content Display Processing Device
- 1c: Content Display Processing Device
- 1d: Content Display Processing Device
- 12: Display Data Generating Section
- 12b: Display Data Generating Section
- 12c: Display Data Generating Section
- 12d: Display Data Generating Section
- 13: Input Operation Analyzing Section
- 13b: Input Operation Analyzing Section
- 13d: Input Operation Analyzing Section
- 22: Menu Information Storage Section
- 23: Content Information Storage Section
- 24: Content Display Attribute Information Storage Section
- 25d: Operation Control Information Storage Section
- 40: Display Section
- 42: Menu Display Area (First Display Area)
- 43: Content Display Area (Second Display Area)
- 44: Information Display Area
- 60: Input Operation Section
- 122: Menu Generating Section (Menu Display Instruction Means)
- 122c: Menu Generating Section (Menu Display Instruction Means)
- 123: Content Information Obtaining Section
- 123b: Content Information Obtaining Section
- 123c: Content Information Obtaining Section
- 123d: Content Information Obtaining Section
- 124b: Meta-information Analyzing Section (Meta- Information Analyzing Means)
- 124d: Meta-information Analyzing Section (Meta- information Analyzing Means)
- 126: Content Display Attribute Information Obtaining Section (Content Display Attribute Obtaining Means)
- 126b: Content Display Attribute Information Obtaining Section (Content Display Attribute Obtaining Means)
- 126d: Content Display Attribute Information Obtaining Section (Content Display Attribute Obtaining Means)
- 127c: Content Update Information Obtaining Section (Content Update Information Obtaining Means)
- 128: Content Data Generating Section (Content Display Instruction Means)
- 128b: Content Data Generating Section (Content Display Instruction Means)
- 128c: Content Data Generating Section (Content Display Instruction Means)
- 128d: Content Data Generating Section (Content Display Instruction Means)
- 129: Menu Item Editing Section (Menu Item Setting Means)
- 132: Menu Selection Detecting Section (Menu Display Instruction Means)
- 133d: Content Operation Detecting Section (Content Display Instruction Means)
- 134b: Predetermined Instruction Detecting Section
- 136d: Switching Operation Detecting Section
- 137d: Operation Control Section (Operation Control Means)

### Description of Embodiments

### [Embodiment 1]

The following describes one embodiment of the present invention with reference to Figs. 1 to 6.

### (Configuration Of Content Display Processing Device)

A content display processing device 1 of the present embodiment is a terminal that carries out processing for, e.g., displaying, on a display section, content such as a mail, an image, or a homepage on the Internet. Examples of the content display processing device 1 is a television, a PC (Personal Computer), a PDA (Personal Digital Assistant), and a portable phone.

In particular, the content display processing device 1 accepts a menu operation by a user through an input operation device such as a remote controller or a mouse, and carries out processing for, e.g., displaying a content on a display section 40 described later in accordance with the menu operation.

The "menu" is a list including a plurality of user-selectable menu items. These menu items each is associated with one or more pieces of content. The one or more pieces of content are associated with each of the menu items by, for example, associating in advance identification information of the each menu item with an extension of a file including the one or more pieces of content. Note that, however, a method of associating the menu item with the one or more pieces of content is not limited to this.

As described above, the each menu item is associated with the one or more pieces of content. Accordingly, by selecting a menu item, it is possible to specify one or more pieces of content associated with the selected menu item. Therefore, when a user selects a menu item, the one or more pieces of content associated with the selected menu item can be specified. Hereinafter, one or more pieces of content associated with a menu item are also referred to as a "content list" associated with the menu item.

Further, the menu item and the content may be received from an external server or may be stored in advance in a storage section or the like of the content display processing device 1. The content may be received from an external server via a broadcast wave or via a communications network. The communications network is not limited in any particular manner, and may be, for example, the Internet, an intranet, an extranet, LAN, ISDN, VAN, CATV communications network, virtual private network, telephone line network, mobile communications network, or satellite communications network. A transfer medium which makes up the communications network is not limited in any particular manner, and may be, for example, wired line, such as IEEE 1394 cable, USB cable, electric power line, cable TV line, telephone line, or ADSL line; or wireless, such as infrared radiation (e.g. IrDA), Bluetooth®, 802.11 wireless, HDR, or mobile telephone network.

The following schematically describes a configuration of the content display processing device 1 with reference to Fig. 1. Fig. 1 is a block diagram schematically illustrating a configuration of the content display processing device 1 according to one embodiment of the present invention. As shown in Fig. 1, the content display processing device 1 includes a control section 10, a storage section 20, a communication section 30, a display section 40, an input operation section 60, and an input/output control section 70.

The control section 10 controls the storage section 20 and the input/output control section 70. The control section 10 also carries out a predetermined operation. The predetermined operation includes, for example, processing for displaying a menu and content on the display section 40. A detailed configuration of the control section 10 is described later.

The storage section 20 stores, for example, various data that is to be utilized by the control section 10 and/or data obtained by execution of a program. The storage section 20 is a memory device such as an ROM (Read-Only Memory) or a hard disk made of an involatile memory such as a flash memory. The various data is stored in various storage sections inside the storage section 20. Note that the storage section 20 is not necessarily provided in the content display processing device 1, but may be configured as an external storage device that is connected in a readable manner to the content display processing device 1.

The storage section 20 particularly includes a menu information storage section 22, a content information storage section 23, and a content display attribute storage section 24. Note that the menu information storage section 22, the content information storage section 23, and the content display attribute storage section 24 may be, for example, a database or a file. These storage sections may be structured in any way, as long as these storage sections are configured such that stored data is searchable and readable.

The menu information storage section 22 stores one or more menu items and display attribute information (layout information) of a menu in a searchable and readable manner. The display attribute information of the menu includes a display position, a display size, and a display color of each menu item. Hereinafter, the one or more menu items and the display attribute information of the menu are referred to as "menu information".

The content information storage section 23 stores, in a searchable and readable manner, content received from an external server or content inputted by a user operation so that the contents are associated with identification information of a menu item. The content information storage section 23 stores content such as a mail, an image, a homepage on the internet, etc., and meta-information (relevant information such as a content ID, a title, a genre, a summary, a creator, the date of creation, update information, an available period, billing information, and a linked object) of the content.

Hereinafter, content and the meta-information of the content are referred to as "content information". Further, one or more pieces of content associated with a menu item and meta-information of the content are referred to as "content information of a content list" associated with the menu item.

The content display attribute information storage section 24 stores display attribute information (layout information) of content, in a searchable and readable manner for each menu item.

The display attribute information is default display attribute information (display position, display size, display color, etc.) for a time when the content is displayed on the display section 40. The display attribute information is set in advance for each menu item. For example, display attribute information in a case where content associated with a menu item "mails" is displayed is different from display attribute information in a case where content associated with a menu item "photos" is displayed.

Hereinafter, the default display attribute information is also referred to as "content display attribute information".

The content display attribute information includes (i) "disposition information" that defines a display position in a content display area 43 and (ii) "displacement information" that defines how content information is associated with a display position defined by the "disposition information". The disposition information and the displacement information are described later by using exemplary descriptions.

The content display attribute information may further include display attribute information (e.g., display size, display color) of a background area (e.g., a content display frame) that is an area other than an area for content display in the content display area 43 (described later).

In addition, the content display attribute information may further include display attribute information (e.g., display position, display size, and display color) for information (e.g., an icon) that is added to the content and displayed.

The communication section 30 communicates with an external server (not shown) via a communications network. The communication section 30 includes a receiving section 32 and a transmitting section 33. Note that in a case where the content display processing device 1 does not receive menu information, content information, and content display attribute information from the external server but carries out processing by use of only menu information, content information, and content display attribute information each of which are stored in advance in the storage section 20, the communication section 30 is dispensable.

The receiving section 32 receives menu information, content information, content display attribute information each of which are transmitted from an external server (not shown). The receiving section 32 is controlled by a reception control section 72 of the input/output control section 70. The menu information, the content information, the content display attribute information that are received by the receiving section 32 are transmitted to the reception control section 72. The reception control section 72 controls the receiving section 32 and transmits the received data to a various data obtaining section 11 described later.

The transmitting section 33 makes a request to an external server (not shown) for obtaining menu information, content information, and content display attribute information. The transmitting section 33 is controlled by a transmission control section 73 of the input/output control section 70. The transmitting control section 73 controls the transmitting section 33 and transmits, to the transmitting section 33, the request received from the various data obtaining section 11 described later.

The display section 40 displays information transmitted from a display control section 74 of the input/output control section 70. The display section 40 is configured by, for example, an LCD (Liquid Crystal Display).

The display section 40 includes a menu display area 42 (first display area) for displaying a menu including user-selectable menu items and a content display area 43 (second display area) for displaying content data (described later) including one or more pieces of content. Note that it is desirable that the menu display area 42 and the content display area 43 do not overlap each other so that a user can easily view and make an operation on each of the menu display area 42 and the content display area 43. Further, the one or more pieces of content displayed in the content display area 43 can be selected by a user operation.

Note that the display section 40 is not necessarily included in the content display processing device 1 but may be configured as an external device that is communicably connected to the content display processing device 1.

The display control section 74 of the input/output control section 70 controls the display section 40 and transmits, to the display section 40, information in an instruction from the control section 10.

The input operation section 60 accepts an input operation that is made by a user of the content display processing device 1, and transmits an input signal in accordance with the input operation to an input operation control section 76. The input operation section 60 is configured by an input device such as a remote controller, a mouse, a keyboard, a switch, or a touch panel. When a user performs an input operation through the input operation section 60, the input operation section 60 generates an input signal in accordance with the input operation, such as selection of a menu item that is to be displayed in the menu display area 42, selection of content that is to be displayed in the content display area 43, or an instruction of a predetermined processing on the selected content.

Note that the input operation section 60 is not necessarily included in the content display processing device 1, but may be configured an external device that is communicably connected to the content display processing device 1.

The input operation control section 76 of the input/output operation section 70 controls the input operation section 60 that accepts a user operation with respect to the content display processing device 1. Further, the input operation control section 76 transmits an input signal in accordance with the input operation of the user, to an input operation analyzing section 13 described later.

Next, the control section 10 is described in detail. The control section 10 includes the various data obtaining section 11, a display data generating section 12, and the input operation analyzing section 13. Note that in a case where the content display processing device 1 does not receive menu information, content information, and content display attribute information from an external server but carries out processing by use of only menu information, content information, and content display attribute information each of which are stored in advance in the storage section 20, the various data obtaining section 11 is dispensable.

The various data obtaining section 11 receives menu information, content information, and content display attribute information from an external server (not shown) via the reception section 32. Then, the various data obtaining section 11 stores thus received data into the storage section 20. That is, the various data obtaining section 11 stores the received menu information into the menu information storage section 22, the received content information into the content information storage section 23, and the received content display attribute information into the content display attribute information storage section 24.

Note that the various data obtaining section 11 may only transfer the received information to the display data generating section 12 without storing the received information into the storage section 20, or the various data obtaining section 11 may store the received information into the storage section 20 and also transfer the received information to the display data generating section 12.

Further, the various data obtaining section 11 may make a request to the external server for obtaining menu information, content information, and content display attribute information in response to a predetermined trigger.

Moreover, the various data obtaining section 11 is not specifically limited in timing for receiving the menu information, the content information, and the content display attribute information from the external server. For example, the various data obtaining section 11 may start to receive the information, in response to a predetermined user instruction from the input operation section 60 as a trigger, or may receive the information every predetermined period set in advance.

Note that in a case where the menu information, the content information, and the content display attribute information are, for example, file-format data, the various data obtaining section 11 may communicate with an external server by use of a communication protocol such as HTTP (Hypertext Transfer Protocol) and FTP (File Transfer Protocol) and carry out processing for obtaining information and processing for receiving information.

The display data generating section 12 generates data that is to be displayed on the display section 40, based on (i) a user input from the input operation section 60 and (ii) the menu information, the content information, and the content display attribute information each of which is received by the various data obtaining section 11 or stored in the storage section 20. For generating the data, the display data generating section 12 includes a menu generating section 122 (menu display instruction means), a content information obtaining section 123, a content display attribute information obtaining section 126 (content display attribute information obtaining means), and a content data generating section 128 (content display instruction means).

First, the menu generating section 122 obtains, from the menu information storage section 22, menu information (i.e., menu items and menu display attribute information) that is to be displayed in response to selection of a menu item, when the menu generating section 122 receives identification information of the menu item that is transmitted from a menu selection detecting section 132 of the input operation analyzing section 13 described later. Note that the menu items and the menu display attribute information may be stored in any form as long as the menu items and the menu display attribute information are stored in a searchable and readable manner. For example, the menu items and the menu display attribute information may be in the form of text data such as XML (extensible Markup Language) text data.

The menu generating section 122 may also obtain the menu information from the menu information storage section 22 in advance, other than at the time when the menu generating section 122 receives identification information of a menu item transmitted from the menu selection detecting section 132.

Instead of obtaining the menu information from the menu information storage section 22, the menu generating section 122 may obtain the menu information form data received from the various data obtaining section 11.

Then, the menu generating section 122 generates a menu in which a user can make a selection, based on the menu information obtained, and displays thus generated menu in the menu display area 42 of the display section 40 via the display control section 74. Note that in a case where a menu is being displayed on the menu display area 42, the menu generating section 122 updates display content of the menu being displayed.

In a case where the menu information necessary for the display in the menu display area 42 is insufficient, the menu generating section 122 may make a request to the various data obtaining section 11 for obtaining necessary data from an external server.

In a screen that is initially displayed right after the content display processing device 1 is turned on, a predetermined menu information set in advance in the menu information storage section 22 or the like is displayed, in some cases, in the menu display area 42 of the display section 40. In such a case, the menu generating section 122 obtains the predetermined menu information set in advance from the menu information storage section 22 or the like.

The content information obtaining section 123 searches content information of a content list associated with a menu item in the content information storage section 23 and obtains the content information, when the content information obtaining section 123 receives identification information of the menu item transmitted from the menu selection detecting section 132 of the input operation analyzing section 13 described later.

The content information of the content list may be stored in any form as long as the content information is stored in a searchable and readable manner in a state associated with the menu item. For example, the content information may be in the form of text data such as XML text data.

In a case where the identification information of the menu item that is transmitted from the menu selection detecting section 132 indicates, for example, a menu item "mails", a content list associated with the menu item is one or more pieces of mail contents that includes meta-information relevant to mails, such as a mail title, a mail sender, a mail body text, and/or a mail attachment file.

The content information obtaining section 123 may also obtain content information of a content list associated with a menu item from the content information storage section 23 in advance other than at the time when the content information obtaining section 123 receives identification information of the menu item transmitted from the menu selection detecting section 132.

Note that the content information obtaining section 123 may obtain the content information of the content list from data that is received from the various data obtaining section 11.

Then, the content obtaining section 123 transmits the obtained content information of the content list to the content data generating section 128.

The content display attribute information obtaining section 126 obtains content display attribute information associated with a menu item from the content display attribute information storage section 24, when the content display attribute information obtaining section 126 receives identification information of the menu item transmitted from the menu selection detecting section 132 of the input operation analyzing section 13 described later.

Note that, as described above, the content display attribute information may include only a display attribute (e.g. color, size, display position) of the content itself, but may further include, for example, a display attribute (e.g. color, size, display position) of information (e.g. display frame, icon) that is to be concurrently displayed in accordance with the content and/or a display attribute (e.g. color, size, position) of the content display area 43.

The content display attribute information obtaining section 126 may also obtain the display attribute information associated with a menu item from the content display attribute information storage section 24 in advance other than at the time when the content display attribute information obtaining section 126 receives identification information of the menu item transmitted from the menu selection detecting section 132.

Then, the content display attribute information obtaining section 126 transmits the obtained content display attribute information to the content data generating section 128.

Then, the content data generating section 128 generates content data that is to be displayed in the content display area 43, based on the content information obtained from the content information obtaining section 123 and the content display attribute information obtained from the content display attribute information obtaining section 126. Further, the content data generating section 128 displays the generated content data in the content display area 43 of the display section 40 via the display control section 74. In displaying the generated content data, the content data generating section 128 does not activate a dedicated application for displaying the content, but only displays the content data in the content display area 43. The "content data" above means one or more pieces of content that are processed for display in the content display area 43 based on the obtained content information and content display attribute information. In other words, the content data generating section 128 uses the content information obtained from the content information obtaining section 123, so as to generate display content that is to be displayed in the content display area 43. Then, the content data generating section 128 displays the generated content in the content display area 43.

Note that in a case where content data is being displayed in the content display area 43, the content data generating section 128 updates contents of the content data being displayed.

In a case where the content necessary for the display in the content display area 43 is insufficient, the content data generating section 128 may make a request to the various data obtaining section 11 for obtaining necessary data from an external server. For example, in a case where content information has been obtained but corresponding content attribute information has not been obtained, the content data generating section 128 may make a request to the various data obtaining section 11 for obtaining the content display attribute information from an external server if a description of the content information contains a description that makes it possible to specify the content display attribute information.

In a screen that is initially displayed right after the content display processing device 1 is turned on, a predetermined content data set in advance in the storage section 20 or the like may be displayed in the content display area 43 of the display section 40. In this case, the content data generating section 128 obtains the predetermined content data set in advance from the storage section 20 or the like.

The input operation analyzing section 13 receives, via the input operation control section 76, an input signal in accordance with a use input operation that is transmitted from the input operation section 60. Then, the input operation analyzing section 13 analyzes the input signal and detects (i) whether or not the input signal is a signal in response to an input operation for selecting a menu item, or (ii) whether or not the input signal is a signal in response to an input operation for performing a content operation. For carrying out this detection, the input operation analyzing section 13 includes a menu selection detecting section 132 and a content operation detecting section 133 (not shown).

The menu selection detecting section 132 detects, based on a signal received from the input operation control section 76, whether or not a user has selected a menu item that is displayed in the menu display area 42 of the display section 40. Then, when the menu selection detection section 132 detects that the user has selected a menu item, the menu selection detecting section 132 transmits identification information of the selected menu item, to the menu generating section 122, the content information obtaining section 123, and the content display attribute information obtaining section 126.

The content operation detecting section 133 detects whether or not the user has performed an operation on content that is displayed in the content display area 43 of the display section 40, based on a signal that is received from the input operation control section 76. Note that when it is detected that the user has performed an operation on the content, the content operation detecting section 133 may carry out processing such as activation of an application for displaying the content on which the operation has been made.

### (Process Flow In Content Display Processing Device)

The following explains an example of a process flow up to content display carried out, by the content display processing device 1, in response to a user menu operation, with reference to Fig. 2. Fig. 2 is a flow chart illustrating an example of a process flow up to content display carried out, by the content display processing device 1, in response to a user menu operation.

The flow chart of Fig. 2 starts from a state where a menu is being displayed in the menu display area 42 of the display section 40 in the content display processing device 1 and content data is being displayed in the content display area 43 of the display section 40.

First, when the menu selection detection section 132 detects that a menu item displayed in the menu display area 42 of the display section 40 is selected by a user operation through the input operation section 60 (Yes in Step S101), the menu generating section 122 obtains, from the menu information storage section 22, menu information corresponding to identification information of the menu item which is transmitted from the menu selection detecting section 132 (Step S102).

Then, the menu generating section 122 generates a menu that is to be displayed in the menu display area 42, based on the obtained menu information, and outputs thus generated menu to the menu display area 42 of the display section 40 via the display control section 74 (Step S102). This allows a state of selection of a menu displayed in the menu display area 42 of the display section 40 and a menu display attribute to be updated, when a user newly selects a menu item.

Next, separately from the above processing, the content information obtaining section 123 obtains content information of a content list associated with the selected menu item (Step S103).

Further, separately from the above processing, the content display attribute information obtaining section 126 obtains content display attribute information associated with the selected menu item, from the content display attribute information storage section 24 (Step S103).

Subsequently, the content data generating section 128 generates content data, based on the content information obtained by the content information obtaining section 123 and the content display attribute information obtained by the content display attribute information obtaining section 126 (Step S104).

At the end, the content data generating section 128 outputs thus generated content data to the content display area 43 of the display section 40 via the display control section 74 (Step S105). This allows the content data that is displayed in the content display area 43 to be updated when a user newly selects a menu item.

Then, a process of the content display processing device 1 returns to a standby state where the content display processing device 1 waits for a user operation (Step S101).

### (Example Of Display Screen Of Content In Content Display Processing Device)

The following describes an example of a screen that displays content data in response to a menu operation in the content display processing device 1, with reference to Fig. 3. Fig. 3 is a diagram schematically illustrating an example of a screen that displays content data in response to a menu operation in the content display processing device 1.

In the example shown in Fig. 3, the menu display area 42 is provided on the left side of a screen of the display section 40. In the screen, a menu in which a user can make a selection is displayed. Further, the content display area 43 is provided on the right side of the screen of the display section 40. In the content display area 43, content data is displayed.

In the present example, the menu includes four menu items including "photos", "mails", "Net", and "news". This menu is displayed in the menu display area 42 by the menu generating section 122. The present example shows a state where a menu item "mails" is selected by a user and highlighted.

Because the menu item "mails" is selected, the content data generating section 128 generates content data based on content information of a content list associated with the menu item "mails" and content display attribute information associated with the menu item "mails". In the present example, the content data is generated so as to include three pieces of mail content, and displayed. That is, as a first mail, a mail having a title "baby was born" is displayed. As a second mail, a mail having a title "hello" is displayed. Further, as a third mail, a mail having a title "regarding new product" is displayed. Note that, in this case, the content generating section 128 displays the third mail while a mail application is not activated.

Though not shown, in a case where a user further selects any one of menu items including "photos", "Net", and "news", the content display area 43 displays content data generated based on content information of a content list associated with thus selected menu item and content display attribute information of thus selected menu item.

### (Examples Of Descriptions of Content Display Attribute Information and Content Information)

With reference to Figs. 4 to 6, the following describes examples of descriptions content display attribute information and content information. Here, mail content is described as an example.

As described above, the content display attribute information includes (i) "disposition information" that defines a display position in a content display area 43 and (ii) "displacement information" that defines how content information is associated with a display position defined by the "disposition information".

Fig. 4 is a diagram schematically describing, in the form of XML-format text data (file name: mail.layout), an example of the disposition information. Here, a text string between "@@" and "@@" indicates a text string that is associated with the above displacement information in processing the text data. In the example of Fig. 4, the first line defines that a text string "mail@@INDEX@@" is positioned at coordinates (20, 50) in a font size "16". Second line defines that a text string "@@SUBJECT@@" is positioned at coordinates (100, 50) in a font size "16". The third line defines that a text string "@@DATE@@" is positioned at coordinates (400, 50) in a font size "16". The last fourth line defines that a text string "@@DETAIL@@" is positioned at coordinates "20, 180" in a font size "14".

Fig. 5 is a diagram schematically describing, in the form of XML-format text data (file name: mail.rule), an example of the displacement information. In the example of Fig. 5, the first line defines that a value indicated by an <index> tag corresponds to "@@INDEX@@" in the disposition information. The second line defines that a value indicated by a <subject> tag corresponds to "@@SUBJECT@@" in the disposition information. The third line defines that a value indicated by a <date> tag corresponds to "@@DATE@@" in the disposition information. The last fourth line defines that a value indicated by a <detail> tag corresponds to "@@DETAIL@@".

The following explains an example in which mail content is displayed in the content display area 43 based on disposition information and displacement information, with reference to Figs. 4, 5, and 6.

Fig. 6 is a diagram schematically describing, in the form of XML-format text data (file name: mail.data), an example of mail content information. In the example of Fig. 6, the third line sets the <index> tag indicating an index number of this mail to a value "1". The fourth line sets the <subject> tag indicating a title of this mail to a text string "baby was born". The fifth line sets the <date> tag indicating a delivery date of this mail to a text string "2004/10/01". The last sixth line sets the <detail> tag indicating a mail body text of this mail to a text string "He is a bouncing baby boy."

Note that: a description of the first line is a description for specifying displacement information, shown in Fig. 5, which corresponds to the content information; and a description of the second line is a description for specifying disposition information, shown in Fig. 4, which corresponds to the content. In this case, the first and second lines each has a description of a file name representing text data shown in Fig. 4 or 5. Note that a method for specifying the displacement information and the disposition information is not limited to these.

The content data generating section 128 carries out the following displacement, based on the mail content information shown in Fig. 6, the displacement information shown in Fig. 5, and the disposition information shown in Fig. 4. In other words, the content data generating section 128 performs: displacement from "@@INDEX@@" to the value "1" indicated by the <index> tag; displacement from "@@SUBJECT@@" to the text string "baby was born" indicated by the <subject> tag; displacement from "@@DATE@@" to the text string "2004/10/01" indicated by the <date> tag; and displacement from "@@DETAIL@@" to the text string "He is a bouncing baby boy" indicated by the <detail> tag.

As a result of the displacement, a text string "mail 1" is disposed at the coordinates (20, 50) in the font size "16". The text string "baby was born" is disposed at the coordinates (100, 50) in the font size "16". Moreover, the text string "2004/10/01" is disposed at the coordinates "400, 50" in the font size "16". Further, the text string "He is a bouncing baby boy" is disposed at (20, 180) in the font size "14".

As a result, as shown in Fig. 3, the content data generating section 128 displays content data including the content of the mail 1, in the content display area 43.

The present example explains the content of mail 1 as an example. However, the same applies to other content. The disposition information and the displacement information may include content information of the content and further include information regarding, for example, a display frame of the content.

Though the example used here employs text string disposition described in the XML-specification. However, the present invention is not limited to this, but a display position may be determined according to another method. For example, the display position may be determined by using a script for determining disposition information for each data item.

### [Embodiment 2]

The present embodiment explains an embodiment in which, in addition to Embodiment 1, content display attribute information is changed in accordance with a user instruction and contents of content information.

The following provides an explanation on the present embodiment with reference to Figs. 7 to 11. Note that for convenience of the explanation, the same reference signs are given to members having identical functions to members described in Embodiment 1 and explanations thereof are omitted.

### (Configuration Of Content Display Processing Device)

The following describes a configuration of a content display processing device 1b with reference to Fig. 7. Fig. 7 is a block diagram illustrating a configuration of the content display processing device 1b of the present embodiment. As shown in Fig. 7, the content display processing device 1b is configured to include a control section 10b, a storage section 20, a communication section 30, a display section 40, an input operation section 60, and an input/output control section 70.

The control section 10b includes substantially the same members as a control section 10 of Embodiment 1. However, the control section 10b includes a display data generating section 12b in place of a display data generating section 12, and an input operation analyzing section 13b in place of an input operation analyzing section 13.

Like the display data generating section 12 of Embodiment 1, the display data generating section 12b generates data that is to be displayed on the display section 40, based on a user input through the input operation section 60 and information regarding a menu, content, and a content display attribute each of which is received by a various data obtaining section 11 or stored in the storage section 20.

The display data generating section 12b includes substantially the same members as a display data generating section 12 of Embodiment 1. However, the display data generating section 12b includes a content information obtaining section 123b in place of a content information obtaining section 123. Moreover, the display data generating section 12b additionally includes a meta-information analyzing section 124b (meta-information analyzing means). Further, the display data generating section 12b includes a content display attribute information obtaining section 126b (content display attribute information obtaining means) in place of a content display attribute information obtaining section 126. In addition, the display data generating section 12b includes a content data generating section 128b (content display instruction means) in place of a content data generating section 128.

The content information obtaining section 123b searches content information of a content list associated with a menu item in a content information storage section 23 and obtains the content information, when the content information obtaining section 12b receives identification information of the menu item which is transmitted from a menu selection detecting section 132b of the input operation analyzing section 13b described later. Note that the content information obtaining section 123b may obtain the content information of the content list from data that is received from the various data obtaining section 11. Then, the content information obtaining section 123b transmits thus obtained content information to the meta-information analyzing section 124b.

Then, the meta-information analyzing section 124b analyzes contents of the content information transmitted from the content information obtaining section 123b, for determining content display attribute information.

Examples of contents of the analysis include checking, for example, a file type (extension) of content, and also examining, for example: (a) whether or not the content information contains predetermined data (e.g. image data); (b) whether or not the content information contains a predetermined tag (e.g. <detail> tag); (c) how many pieces of predetermined data the content information contains; and/or (d) whether or not the content information contains date-and-hour information (e.g. date and hour of imaging in the case of photographic data). However, the analysis is not limited to these.

In a method for carrying out the above (a), for example, it is analyzed whether or not a predetermined tag indicative of an image is contained or whether or not an extension of a file name is predetermined one (e.g., JPG, or BMP). However, the method is not limited to the above method. Further, in a method for carrying out the above (c), for example, the number of predetermined tags indicative of data is analyzed or it is analyzed whether or not a predetermined tag indicative of the number of pieces of predetermined data is contained. However, the method for carrying out the above (c) is not limited to these. Furthermore, in a method for carrying out the above (d), for example, it is analyzed whether or not a predetermined tag indicative of date-and-hour information is contained. However, the method for carrying out the above (d) is not limited to this.

Then, the meta-information analyzing section 124b transmits a result of the analysis to the content display attribute information obtaining section 126b and the content data generating section 128b.

The content display attribute information obtaining section 126b obtains content display attribute information associated with a menu item from a content display attribute information storage section 24, when the content display attribute information obtaining section 126b receives identification information of the menu item transmitted from the menu selection detecting section 132 of the input operation analyzing section 13.

In a case where the content display attribute information is associated with the result of the analysis in advance, the content display attribute information obtaining section 126b may obtain the content display attribute information corresponding to the result of the analysis from the content display attribute information storage section 24 when the content display attribute information obtaining section 126b receives the result of the analysis from the meta-information analysis section 124b.

Note that, as described above, the content display attribute information may include not only display attribute information of content itself but also display attribute information of information that is to be concurrently displayed with the content and display attribute information of a content display area 43 for the time when the content is displayed.

In a case where content display attribute information is associated in advance with a predetermined user instruction that is transmitted from a predetermined instruction detecting section 134b of the input operation analyzing section 13b described later, the content display attribute information obtaining section 126b may further obtain, from the content display attribute information storage section 24, content display attribute information corresponding to a predetermined user instruction when a notification that the predetermined user instruction is made is received. The predetermined user instruction is, for example, (i) an instruction to simultaneously display a plurality of pieces of content as a list (thumbnail display) in the content display area 43, (ii) an instruction to display one selected piece of content in the entire content display area 43, or (iii) an instruction to change respective positions and/or respective sizes of the menu display area 42 and the content display area 43. However, the user instruction is not limited to the above instructions.

Note that the content display attribute information obtaining section 126b may obtain the content display attribute information from data received from the various data obtaining section 11.

Then, the content display attribute information obtaining section 126b transmits thus obtained content display attribute information to the content data generating section 128b.

Next, the content data generating section 128b generates content data that is to be displayed in the content display area 43, based on the content information obtained from the content information obtaining section 123b and the content display attribute information obtained from the content display attribute information obtaining section 126b. Then, the content data generating section 128b displays thus generated content data in the content display area 43 of the display section 40 via the display control section 74. Here, the content data generating section 128b displays the content data, without activating a dedicated application for displaying the content.

Note that, in a case where content data is being displayed in the content display area 43, the content data generating section 128b updates contents of the display.

Further, the content data generating section 128b changes an appearance (design) in display of thus generated content data, based on the result of the analysis obtained form the meta-information analyzing section 124b.

The change in the appearance (design) includes, for example, a change in a display attribute (color, size, display position, etc.) of the content data, a change in a display attribute (color, size, display position, etc.) of a part of content included in the content data, a change in a display attribute (color, size, display position, etc.) of information (display frame, icon, etc.) that is to be displayed concurrently with the content data, a change in a type of information that is to be concurrently displayed with the content data, and a change in a display attribute (color, size, display position, etc.) of the content display area 43. However, the change in the appearance (design) is not limited to these.

The content data generation section 128b may also change an appearance (design) in display of thus generated content data, based on the number of times content included in the generated content data has been displayed so far. For example, a color of the content may be made thicker in accordance with the number times the content has been displayed so far. The number of times the content has been displayed so far may be stored in the storage section 20. This allows a user to easily tell content that has been displayed many times and content that has been displayed a small number of times.

Further, the content data generating section 128b may change an appearance (design) in display of the content data, based on an elapsed time from a start of displaying the generated content data in the content display area 43. The elapsed time from the start of the display in the content display area 43 may be measured by use of a timer (not shown) or the like.

Furthermore, the content data generating section 128b selects as appropriate a draw engine for causing the content data to be displayed in the content display area 43 in accordance with the result of the analysis, in a case where the result of the analysis obtained from the meta-information analyzing section 124b includes information that makes it possible to specify a draw engine for drawing the content in the second display area. For example, in a case where the result of the analysis reveals that JPEG-format photographic data is contained, the content data generating section 128b selects a JPEG decoder, whereas, in a case where the result of the analysis reveals that an HTML-format file is contained, the content data generating section 128b selects an HTML draw engine.

The input operation analyzing section 13b receives an input signal that is transmitted from the input operation section 60 via an input operation control section 76 in accordance with a user input operation. Then, the input operation analyzing section 13b analyzes the input signal and detects: (1) whether or not the input signal is a signal in response to an input operation for selecting a menu item; (2) whether or not the input signal is a signal in response to an input operation on content; or (3) whether or not the input signal is a signal in response to an input operation of a predetermined user instruction. The predetermined user instruction is, for example, (i) an instruction to simultaneously display a plurality of pieces of content as a list (thumbnail display) in the content display area 43, (ii) an instruction to display one selected piece of content in the entire content display area 43, or (iii) an instruction to change respective positions and/or respective sizes of the menu display area 42 and the content display area 43. However, the user instruction is not limited to the above instructions.

The input operation analyzing section 13b includes the menu selection detecting section 132 and the predetermined instruction detecting section 134b.

The predetermined instruction detection section 134b detects whether or not the predetermined user instruction is made, based on the signal that is received from the input operation control section 76. Then, when it is detected that the predetermined user instruction is made, the predetermined instruction detecting section 134b transmits, to the content display attribute information obtaining section 126b, a notification that the predetermined user instruction is made.

### (Example Of Screens)

The following describes contents of content information or content display in accordance with a user instruction by using examples, with reference to Figs. 8 to 11. Note that the content display attribute information and the content information for realizing examples of screens shown in Figs. 8 to 11 can be described in an XML-format text data, like examples of descriptions shown in Figs. 4 to 6, and specific descriptions thereof are omitted here.

### (Image Data Content)

Fig. 8 is a diagram schematically illustrating a screen showing image data content. In an example shown in Fig. 8, the menu display area 42 is provided on the left side of the display section 40. The menu display area 42 displays a menu that includes four menu items including "applications", "photos", "mails", and "Net". In this example, the menu item "photos" is selected by a user and highlighted.

In response to the selection in the menu by the user, the menu selection detecting section 132b transmits menu identification information indicative of a menu item "photos", and the content information obtaining section 123b receives the menu identification information. Then, the content information obtaining section 123b obtains content information of a content list associated with the menu item "photos".

Then, the meta-information analyzing section 124b analyzes contents of the content information obtained by the content information obtaining section 123b. As a result of the analysis, for example, in a case where the content information is found to include one predetermined tag that indicates image data, the content data generating section 128b, for example, disposes the image data in the entire content display area 43 as shown in Fig. 8. Meanwhile, as the result of the analysis, for example, in a case where the content information is found to include date-and-hour information, the content data generating section 128b may change color of a display frame depending on time of the date-and-hour information.

In a case where a plurality of pieces of image data are contained in the content information, display modes may be switched according to a user instruction. Such display modes includes: a mode for displaying a plurality of images as a list (thumbnail display); a mode for displaying the plurality of images in a slide show; and a mode for displaying only one image. Fig. 9 is a diagram schematically illustrating a screen that is obtained by adding, to the screen of Fig. 8, a mode switching button for switching the display modes. In Fig. 9, a mode switching button 701 for such switching of the display modes is provided in a position at the lower right of the content display area 43. The content display attribute information in accordance with a user operation on the mode switching button 701 is obtained from the content display attribute information storage section 24. Note that display attributes may be arranged so that a color of a display frame 700 changes depending on a display mode.

Note that in the case of the thumbnail display, a display position or a size of the menu display area 42 or the content display area 43 may be changed. (a) of Fig. 10 and (b) of Fig. 10 are diagrams schematically illustrating screens in a state where thumbnail display is carried out by switching the display modes.

In a case where a plurality of images are simply displayed in thumbnail display in the content display area 43 by use of the mode switching button or the like described in Fig. 9, the menu display area 42 may overlap the content display area 43. For example, in (a) of Fig. 10, a part of the menu display area 42 is behind the content display area 43 and an overlapped area is difficult to view. In such a case, a display position and/or a size of the menu display area 42 or the content display area 43 should be changed. In an example shown in (b) of Fig. 10, a size of the menu display area 42 is reduced so that the menu display area 42 and the content display area 43 do not overlap each other.

### (Content Including Date-And-Hour Information)

(a) to (d) of Fig. 11 are diagrams each schematically illustrating a state where a different display frame and a different icon are displayed concurrently with content, based on date-and-hour information accompanying image data. (a) of Fig. 11 is a diagram schematically illustrating a state where content data including a display frame and an icon each of which is suitable for the morning time is displayed. (b) of Fig. 11 is a diagram schematically illustrating a state where content including a display frame and an icon each of which is suitable for the afternoon time is displayed. (c) of Fig. 11 is a diagram schematically illustrating a state where content including a display frame and an icon each of which is suitable for the evening time is displayed. (d) of Fig. 11 is a diagram schematically illustrating a state displaying content including a display frame and an icon each of which is suitable for the late-night time is displayed.

In examples shown in (a) to (d) of Fig. 11, the menu display area 42 is provided on the left side of the screen of the display area 40. The menu display area 42 displays a menu that includes four menu items including "applications", "photos", "mails", and "Net". In these examples, the menu item "photos" is selected by a user and highlighted.

In response to the selection in the menu by the user, the menu selection detecting section 132b transmits menu identification information indicating the menu item "photos", and the content information obtaining section 123b receives the menu identification information. Then, the content information obtaining section 123b obtains content information of a content list associated with the menu item "photos".

Then, the meta-information analyzing section 124b analyzes contents of the content information obtained by the content information obtaining section 123b. As a result of the analysis, for example, in a case where the content information is found to include date-and-hour information of image data, the content data generating section 128b changes content display attribute information in accordance with the date-and-hour information. Note that the date-and-hour information is, for example, date-and-hour information described in EXIF (Exchangeble Image File Format) data attached to the image data or date-and-hour information of the image file itself.

For example, in a case where the date-and-hour information indicates the morning time, the content data generating section 128b turns the display frame 700 blue and also changes an icon 702 to an icon of a morning image ((a) of Fig. 11). Moreover, for example, in a case where the date-and-hour information indicates the afternoon time, the content data generating section 128b turns the display frame 700 yellow and also changes the icon 702 to an icon of an afternoon image ((b) of Fig. 11). Further, for example, in a case where the date-and-hour information indicates the evening time, the content data generating section 128b turns the display frame 700 orange and also changes the icon 702 to an icon of an evening image ((c) of Fig. 11). Furthermore, for example, in a case where the date-and hour information indicates the late-night time, the content data generating section 128b turns the display frame 700 navy and also changes the icon 702 to an icon of a late-night image ((d) of Fig. 11).

Note that the content display attribute information is not limited to time of the date-and-hour information. The content data generating section 128b may obtain content display attribute information that corresponds to, for example, months (January to December) or seasons (spring, summer, fall, and winter).

### (Modified Example)

The above description exclusively takes photographs as an example of content. However, types of the content are not limited to this. For example, the content display attribute information can be similarly changed in accordance with a result of an analysis of contents (date-and-hour of creation/update of the content, the presence of a tag, the number of pieces of data) of content information, even if the content is, for example, content of a homepage or a blog described in HTML or XML, news information which is provided in RSS (RDF Site Summary), schedules, or a URL list of the Internet. In particular, in a case where the content display attribute information is changed in accordance with a date and hour of creation/update of the content, a user can visually and promptly judge whether content such as a homepage, a blog, or news that is to be displayed has been updated recently or within several months, or has not been updated for years. This allows the user to visually and promptly judge reliability of information described in the content.

Further, though the content display attribute information is changed in accordance with a result of an analysis on contents of content information in the present embodiment, it is obvious that the content display attribute information may be selected according to only a menu item selected by a user (while the contents of the content information are not analyzed). Note that in a case where the content display attribute information is changed in accordance with a result of an analysis on contents of content information, display can be precisely controlled according to the contents of the content information. However, a display control process becomes complicated. Meanwhile, in a case where the display is controlled in accordance with a menu item selected by a user, a load of a display control process can be alleviated though the display cannot be precisely controlled as described above.

### [Embodiment 3]

The present embodiment further explains an embodiment in which update information of content is further displayed.

The update information of the content is information regarding update of the content. For example, the update information is a notification that the content is updated, a date and hour of update of the content, or the like. Hereinafter, the update information of the content is also referred to "content update information".

The following describes the present embodiment with reference to Figs. 12 to 17. Note that for convenience of explanation, the same reference signs are given to members having identical functions to members described in Embodiments 1 and 2 and explanations thereof are omitted.

### (Configuration Of Content Display Processing Device)

With reference to Fig. 12, the following describes a configuration of a content display processing device 1c. Fig. 12 is a block diagram illustrating a configuration of the content display processing device 1c according to the present embodiment. As illustrated in Fig. 12, the content display processing device 1c includes a control section 10c, a storage section 20, a communication section 30c, a display section 40, an input operation section 60, and an input/output control section 70c.

The communication section 30c includes substantially the same members as a communication section 30 of Embodiment 1 except that the communication section 30c includes a transmitting section 33c in place of a transmitting section 33. In addition to functions of the transmitting section 33, the transmitting section 33c makes a request to an external server (not shown) for receiving content update information, when the transmitting section 33c receives a request for obtaining the content update information from a various data obtaining section 11c described later. The transmitting section 33c is controlled by a transmission control section 73c of the input/output control section 70c. The transmission control section 73c controls the transmitting section 33c. The transmission control section 73c receives, from the various data obtaining section 11c, the request for obtaining the content update information, and sends the request to the transmitting section 33c.

The control section 10c includes the substantially same members as a control section 10 of Embodiment 1 except that the control section 10c includes the various data obtaining section 11c in place of a various data obtaining section 11, and a display data generating section 12c in place of a display data generating section 12.

In addition to functions of the various data obtaining section 11, the various data obtaining section 11c receives, from a content update information obtaining section 127c, a request for obtaining content update information. The various data obtaining section 11c makes the request to an external server (not shown) for obtaining the content update information via the transmitting section 33c, when the various data obtaining section 11c receives the request for obtaining the content update information. Then, in response to the request, the various data obtaining section 11c receives the content update information from the external server via the reception section 32. Subsequently, the various data obtaining section 11c transmits the received content update information to the content update information obtaining section 127c.

The display data generating section 12c generates content data that is to be displayed on the display section 40, based on menu information, content information, and content display attribute information each of which is received by the various data obtaining section 11c or stored in the storage section 20, and a user input through the input operation section 60. In generation of the content data, the display data generating section 12c arranges the content data according to the content update information so that predetermined information indicating that a menu item or content is updated is displayed in addition.

The display data generating section 12c includes substantially the same members as the display data generating section 12 of Embodiment 1. However, the display data generating section 12c includes: a menu generating section 122c (menu display instruction means) in place of a menu generating section 122; a content information obtaining section 123c in place of a content information obtaining section 123; and a content data generating section 128c (content display instruction means) in place of a content data generating section 128. Further, the display data generating section 12c additionally includes the content update information obtaining section 127c.

In addition to functions of the menu generating section 122 of Embodiment 1, the menu generating section 122c adds predetermined information indicating that content information of a content list is updated, to a menu item associated with the content list, and displays the predetermined information on the display section 40, when the menu generating section 122c receives, from the content update information obtaining section 127c, a notification that the content information of the content list is updated. For example, the menu generating section 122c adds a predetermine icon to the menu item and displays the predetermined icon, or adds a predetermined color display frame to the menu item and displays the predetermined color display frame.

In addition to functions of the content information obtaining section 123, the content information obtaining section 123c transmits obtained content information to the content update information obtaining section 127c.

Then, the content update information obtaining section 127c obtains content update information contained in the content information received from the content information obtaining section 123c. Note that the content update information obtaining section 127c may obtain the content update information from an external server (not shown). In a case where the content update information obtaining section 127c obtains the content update information from an external server, the content update information obtaining section 127c transmits, to the various data obtaining section 11c, a request for obtaining the content update information. In response to the request, the content update information obtaining section 127c receives the content update information from the various data obtaining section 11c.

Note that various methods are generally known as a method for obtaining the content update information included in the received content information. For example, in a case where the received content information is described in a text file such as an XML text file and includes a tag in which the date and hour of update or whether or not the content information is updated is described, a value of the tag may be obtained as the content update information.

Alternatively, as another method for obtaining the content update information, in a case where the received content information includes a plurality of URLs, the content update information obtaining section 127c may access the URLs via the various data obtaining section 11c so as to obtain update information of linked objects indicated by the URLs by use of getLastModified of an HTTP protocol or the like.

As a still another method for obtaining the content update information, in a case where the received content information is described in a text file such as an XML text file, the content update information obtaining section 127c may obtain the date and hour of update of the text file itself as the content update information.

Then, the content update information obtaining section 127c determines whether or not the content included in the received content information is updated, based on thus obtained content update information. In a case where the content update information obtaining section 127c determines that the content included in the received content information is updated, the content update information obtaining section 127c notifies the menu generating section 122c that the received content information is updated and also notifies the content data generating section 128c that the content included in the received content information is updated.

Note that various methods are generally known as a method for determining whether or not the content is updated. For example, in a case where the obtained content update information is the date and hour of update, the content update information obtaining section 127c compares the date and hour of update with the previously obtained date and hour of update or the date and hour of previous display of the content, so as to determine whether or not the content is updated.

There are various methods for determining whether or not a content list is updated. For example, if at least one piece of content included in the content list is updated, it may be determined that the content list is updated. In a case where the content list is described in a text file such as an XML text file, it may be determined that the content list is updated if the date and hour of update of the text file is updated as compared to the last obtained time and date of the text file.

In addition to functions of the content data generating section 128 of Embodiment 1, the content data generating section 128c has a function to add predetermined information indicating that the content is updated and displays the predetermine information on the display section 40, when the content data generating section 128c receives a notification that the content is updated from th the content update information obtaining section 127c. For example, the content data generating section 128c adds a predetermined icon to the content and displays the predetermined icon, or adds a display frame of a predetermined color to the content and displays the display frame of the predetermined color.

### (Example Of Display Screen)

The following describes an example of a screen that displays content update information, with reference to Fig. 13. Fig. 13 is a diagram schematically illustrating a screen that displays content update information.

In the example of Fig. 13, a menu display area 42 is provided on the left side of a screen of the display section 40. The menu display area 42 displays a menu that includes four menu items including "mails", "Net", "news", and "schedules". In this example, the menu item "Net" is selected by a user and highlighted.

In the present example, the menu items "Net" and "news" is displayed together with respective "New" icons 703 each of which indicates that content is updated. This shows that the content included in the menu items "Net" and "news" includes updated content.

Further, in response to the above menu selection of the user, the content display area 43 on the right side of the screen of the display section 40 displays five pieces of contents including "Internet Site - A", "Internet Site - B", "Internet Site - C", "Internet Site - D" and "Internet Site - E".

Here, the "New" icon 704 indicating that content is updated is added to each of pieces of content including "Internet Site - B", "Internet Site - D" and "Internet Site - E". This shows that these pieces of content (i.e. "Internet Site - B", "Internet Site - D" and "Internet Site - E") are updated.

### (Example Of Description Of Content)

The following describes an example of a description of content with reference to Figs. 14 and 15. The following description raises, as an example, content describing a link to a site on the Internet.

Fig. 14 is a diagram schematically showing a description of XML-format text data including three pieces of content: "Internet Site - A", "Internet Site - B", and "Internet Site - C" shown in Fig. 13.

In this example, a name of a menu item, that is, "Net" is described as a value of a <channelset> tag. Further, a title of the content is described as a value of a <title> tag in a <channel> tag. In addition, a URL that is a link is described as a value of a <link> tag.

The content update information obtaining section 127c determines whether or not the content is updated, for example, by comparing the date and hour of update of the text data file with the date and hour of previous display of the content. Alternatively, the content update information obtaining section 127c may make an access to the URL that is a link and determines whether or not each piece of content is updated, for example, by use of getLastModified of an HTTP protocol.

Fig. 15 is a diagram schematically showing a description of XML-format text data of content whose content update information is explicitly described.

In this example, each of the <channelset> tag and the <channel> tag of the Internet Site - A includes a <date> tag for describing a date and hour of update. The content update information obtaining section 127c determines whether or not the content is updated by comparing this date and hour of update and the date of previous display of the content.

Note that, instead of a general tag describing the date and hour of update, a unique tag describing the content update information may be used. For example, as shown in Fig. 15, the <channel> tag of the Internet Site - B is provided with a <status> tag having a description of a value "new". The value of this <status> tag allows the content update information obtaining section 127c to find whether or not the content is updated without comparison of the above dates and hours.

### (Modified Example)

The contents described above are all examples. Accordingly, for example, a tag name and a description format other than the above described ones are also possible. Further, the above description raises an example in which an icon indicating that a menu item or content is updated is added to the menu item or the content and displayed. However, instead of displaying the icon, a color of a display frame of the menu item or the content can be changed so as to display that the menu item or the content is updated.

Alternatively, information indicating that the menu item or the content is updated may be displayed in an area different from an area where the menu item or the content is displayed. Fig. 16 is a diagram schematically illustrating an example of a screen that displays the information indicating that the menu item or the content is updated in an area different from an area where the menu item or the content is displayed. In Fig. 16, the display section 40 is additionally provided with an information display area 44 separately from the menu display area 42 and the content display area 43. In this example, when a user selects an updated menu item or updated content, a predetermined icon 705 blinks in the information display area 44 in display.

The above embodiment illustrates a configuration in which: the content display processing device 1c additionally includes the content update information obtaining section 127c; and the content update information is obtained by the content update information obtaining section 127c while other content information is obtained by the content information obtaining section 123c. However, the content display processing device 1c may be configured such that the content information obtaining section 123c has a function of the content update information obtaining section 127c or such that the menu generating section 122c and the content data generating section 128c has a function of the content update information obtaining section 127c.

The above description explains an embodiment in which the content update information is added to a menu item or content and displayed. However, it is also possible to add content information such as recommended information or genre information to a menu item or content and display the content information, in a method similar to the method described above.

Fig. 17 is a diagram schematically showing a description of an example of a description of content including content information such as recommended information and genre information. In this example, content of the <title> tag having a value "Internet Site - A" has a description of the <status> tag having a value "new" indicating that the content is updated. Moreover, content of the <title> tag having a value "Internet Site - B" has a description of the <status> tag having a value "new;recommend" indicating that the content is updated and also is information recommended by a provider. Further, content of the <title> tag having a value "Internet Site - C" has a description of the <genre> tag having a value "music" indicating that the content is in a music genre.

In this case, the content update information obtaining section 127c may be configured to obtain the recommended information or the genre information from the <status> tag, and then to notify the menu generating section 122c and the content data generating section 128c that the recommended information or the genre information is obtained. The menu generating section 122c and the content data generating section 128c may be configured to subsequently output, according to the notification, an icon or the like corresponding to the recommended information or the genre information to the display section 40.

### [Embodiment 4]

The present embodiment describes an embodiment in which a menu operation and a content operation are switched by a user operation.

The following describes the present embodiment with reference to Figs. 18 and 19. Note that for convenience of explanation, the same reference signs are given to members having identical functions to members described in the above-described Embodiments and explanations thereof are omitted.

### (Configuration Of Content Display Processing Device)

The following describes a configuration of a content display processing device 1d with reference to Fig. 18. Fig. 18 is a block diagram illustrating a configuration of the content display processing device 1d of the present embodiment. As shown in Fig. 18, the content display processing device 1d includes a control section 10d, a storage section 20d, a communication section 30, a display section 40, an input operation section 60, and an input/output control section 70.

The storage section 20d includes an operation control information storage section 25d, in addition to a storage section 20 of Embodiment 2. The operation control information storage section 25d stores control information of a user input operation. The control information of the user input operation is information that associates an input operation by a user through the input operation section 60, a type of content that is to be subjected to processing in the control section 10d according to the input operation, and contents of the processing with one another.

The control information is not specifically limited as long as the control information tells control information of a user input operation in accordance with a type of content. For example, the control information may be a combination of a type of content (e.g. mail), an input operation with respect to the content (e.g. a press of an up arrow key) and a move after the input operation (e.g. move a cursor position upward). However, the control information is not limited to this. Note that the above example means that when a user input operation is performed on the upward arrow key of the input operation section 60 with respect to a plurality of pieces of mail content displayed in a list format, the cursor position is moved upward in the list.

The control information is not necessarily stored in the storage section 20d but may be retained within the control section 10d as an internal file or internal data. Further, the control data may be data that is stored into the operation control information storage section 25d by a user operation, or may be data that is obtained from an external server and stored in the operation control information storage section 25d.

The control section 10d includes substantially the same members as a control section 10b of Embodiment 2. However, the control section 10d includes a display data generating section 12d in place of a display data generating section 12. Further, the control section 10d includes an input operation analyzing section 13d in place of an input operation analyzing section 13.

The display data generating section 12d, like the display data generating section 12b of Embodiment 2, generates data that is to be displayed on the display section 40, based on menu information, content information, and content display attribute information each of which is received by a various data obtaining section 11 or stored in the storage section 20, and based on a user input from the input operation section 60.

The display data generating section 12b has substantially the same members as the display data generating section 12 of Embodiment 2. However, the display data generating section 12b includes: a content information obtaining section 123d in place of a content information obtaining section 123; a content display attribute information obtaining section 126d (content display attribute information obtaining means) in place of a content display attribute information obtaining section 126b; and a content data generating section 128d (content display instruction means) in place of a content data generating section 128b. Further, the display data generating section 12d additionally includes a meta-information analyzing section 124d (meta-information analyzing means).

The content information obtaining section 123d searches content information of a content list associated with a menu item in a content information storage section 23 and obtains the content information, when the content information obtaining section 123d receives identification information of the menu item which is transmitted from a menu selection detecting section 132 (menu display instruction means) of the input operation analyzing section 13d. Further, the content information obtaining section 123d searches content information in the content information storage section 23 and obtains the content information, when the content information obtaining section 123d receives a notification that new content information needs to be obtained from the content operation detecting section 133d (content display instruction means) of the input operation analyzing section 13d. Note that the content information obtaining section 123d may obtain the content information from data that is received from the various data obtaining section 11.

Then, the content information obtaining section 123d transmits the obtained content information to the meta-information analyzing section 124d.

Then, the meta-information analyzing section 124d analyzes contents of the content information that is transmitted from the content information obtaining section 123d, for changing content display attribute information. Further, the meta-information analyzing section 124d transmits a result of the analysis to the content data generating section 128d. The meta-information analyzing section 124d may also transmit the result of the content to the content display attribute information obtaining section 126d.

In addition, the meta-information analyzing section 124d may transmit the result of the analysis to an operation control section 137d (operation control means) for changing the control information of the user input operation.

The content display attribute obtaining section 126d obtains content attribute information associated with a menu content from a content display attribute information storage section 24, when content display attribute obtaining section 126d receives identification information of the menu item that is transmitted from the menu selection detecting section 132 of the input operation analyzing section 13d.

In a case where the content display attribute information is associated in advance with the result of the analysis, the content display attribute information obtaining section 126d may search the content display attribute information corresponding to the result of the analysis in the content display attribute information storage section 24 and obtain the content display attribute information when the content display attribute information obtaining section 126d receives the result of the analysis from the meta-information analyzing section 124d.

Alternatively, the content display attribute information obtaining section 126d may search the content display attribute information in the content display attribute information storage section 24 and obtain the content display attribute information, when the content display attribute information obtaining section 126d receives, from the content operation detecting section 133d of the input operation analyzing section 13d described later, a notification that new content display attribute information needs to be obtained.

Note that the content display attribute information obtaining section 126d may obtain the content display attribute information from data that is received from the various data obtaining section 11.

Then, the content display attribute information obtaining section 126d transmits thus obtained content display attribute information to the content data generating section 128d.

Next, the content data generating section 128d generates content data by carrying out processing similar to processing carried out by the content data generating section 128b of Embodiment 2, based on the content information obtained from the content information generation section 123d, the content display attribute information obtained from the content display attribute information obtaining section 126d, and the result of the analysis obtained from the meta-information analyzing section 124d. Then, the content data generating section 128d outputs thus generated content data to the content display area 43.

The input operation analyzing section 13d receives an input signal in accordance with a user input operation that is transmitted from the input operation section 60 via the input operation control section 76. Then, the input operation analyzing section 13d analyzes the input signal and detects (i) whether or not the input signal is a signal in response to an input operation for selecting a menu item, (ii) whether or not the input signal is a signal in response to an input operation for performing a content operation, or (3) whether or not the input operation is a signal corresponding to an instruction for switching an operation target to either a menu or content.

The input operation analyzing section 13d includes the menu selection detecting section 132, the content operation detecting section 133d, a switching operation detecting section 136d, and the operation control section 137d.

The content operation detecting section 133d detects a user input operation according to the control information of the use input operation that is notified by the operation control section 137d. Then, based on a signal that is received from the input operation control section 76, the content operation detecting section 133d detects whether or not a user has performed an operation with respect to content that is displayed in the content display area 43. Then, when the content operation detecting section 133d detects that the user has performed the operation with respect to the content, the content operation detecting section 133d provides a predetermined notification to the display data generating section 12d.

One example of a user operation with respect to content displayed in the content display area 43 is a user operation on up/down arrow keys of the input operation section 60 in a case where the content is displayed in a list form. This operation is for instructing a cursor position in the list to move upward/ downward.

Another example of the user operation is a user operation on a right arrow key of the input operation section 60 in a case where data pieces is displayed one by one like photographs in the content. This operation instructs display of a next piece of photographic content. Further, in the above case, the user operation also includes, for example, a user operation on an up arrow key. This is an operation for instructing to switch to a slide show mode.

The content operation detecting section 133d also notifies the content information obtaining section 123d that new content needs to be obtained in a case where the new content relevant to content on which a user operation is performed needs to be obtained. Further, in a case where it is necessary to obtain new content display attribute information relevant to the content on which the user operation, the content operation detecting section 133d notifies the content display attribute information obtaining section 126d that the new content display attribute information needs to be obtained.

The switching operation detecting section 136d detects whether or not a user has made an instruction to switch a user operation target to either a menu or content, based on a signal that is received from the input operation control section 76. Then, in a case where it is detected that a user has made an instruction to switch to a menu, the switching operation detecting section 136d turns the menu selection detecting section 132 active while turning the content operation detecting section 133d inactive. Meanwhile, in a case where it is detected that a user has made an instruction to switch to content, the switching operation detecting section 136d turns the content operation detecting section 133d active while turning the menu selection detecting section 132 inactive.

The operation control section 137d notifies, to the content operation detecting section 133d, default control information of a user operation of the input operation section 60. This default control information is set in the operation control information storage section 25d. The operation control section 137d also changes control information of a use input operation, based on a result of analysis of content information that is transmitted from the meta-information analyzing section 124d. Then, the operation control section 137d notifies thus changed control information to the content operation detecting section 133d.

For example, in a case where the operation control section 137d receives a result of analysis of content information and the result of the analysis reveals that content is displayed in a list format, the operation control section 137d changes the control information to be information indicating that the user operation on up/down arrow key of the input operation section 60 is control of upward/downward movement of a cursor position in the list.

Alternatively, for example, in a case where the operation control section 137d receives a result of analysis of content information and the result of the analysis reveals that, in the content, data pieces are displayed one by one like photographs, the operation control section 137d changes the control information to be information indicating that a user operation on a right arrow key of the input operation section 60 is control to display a next piece of photographic content. Further, for example, in such a case, the operation control section 137d changes the control information to be information indicating that a user operation on an up arrow key of the input operation section 60 is switching control to a slide show mode.

Note that a guidance indicating control information of a user input operation may be displayed on the display section 40 for showing, to a user, current control information of a user input operation on the input operation section 60 (e.g. information indicative of how a remote controller key is allotted in accordance with a user input operation). Note that the guidance may be displayed only for a predetermined period and then hidden.

### (Process Flow In Content Display Processing Device)

The following describes one example of a process for switching between a menu operation and a content operation in the content display processing device 1d with reference to Fig. 19. Fig. 19 is a flow chart illustrating an example of a process flow for switching between the menu operation and the content operation by a user operation.

The flow chart of Fig. 19 starts with a state in which a menu is being displayed in the menu display area 42 of the display section 40 of the content display processing device 1d and content data is being displayed in the content display area 43 of the display section 40.

The steps S201 to S205 are substantially the same as the steps S101 to S105 in a flow chart shown in Fig. 2 of Embodiment 1. That is, when the menu selection detecting section 132 detects that a menu item displayed in the menu display area 42 of the display section 40 is selected by a user operation through the input operation section 60 (YES in Step S201), the menu generating section 122d obtains, from the menu information storage section 22, menu information corresponding to identification information of the menu item which is transmitted from the menu selection detecting section 132 (Step S202).

Then, based on thus obtained menu information, the menu generating section 122d generates a menu displayed in the menu display area 42, and outputs thus generated menu to the menu display area 42 of the display section 40 via the display control section 74 (Step S202).

Then, separately from the above process, the content information obtaining section 123d obtains content information of a content list associated with the menu item selected above (Step S203).

Further, the content display attribute information obtaining section 126d obtains, from the content display attribute information storage section 24, content display attribute information corresponding to a result of analysis on the content information by the meta-information analyzing section 124d (Step S203).

Then, the content data generating section 128d generates content data, based on the content information obtained by the content information obtaining section 123d, the content display attribute information obtained by the content display attribute information obtaining section 126d, and a result of analysis obtained from the meta-information analyzing section 124d (Step S204).

Then, the content data generating section 128d outputs thus generated content data to the content display area 43 of the display section 40 via the display control section 74 (Step S205).

Meanwhile, in a case where the menu selection detecting section 132 does not detect that a menu item displayed in the menu display area 42 of the display section 40 is selected by a user operation through the input operation section 60 (No in Step S201) and the content operation detecting section 133d detects that the content that is to be displayed in the content display area 43 of the display section 40 is selected (YES in Step S206), the content operation detecting section 133d notifies the content information obtaining section 123d and the content display attribute information obtaining section 126d that the content that is to be displayed in the content display area 43 of the display section 40 is selected. Then, the content data generating section 128d generates content data based on content information obtained by the content information obtaining section 123d, content display attribute information obtained by the content display attribute information obtaining section 126d, and a result of analysis of the meta-information analyzing section 124d. Subsequently, the content data generating section 128d outputs thus generated content data to the content display area 43 of the display section 40 via the content control section 74 and updates display (YES in Step S207).

Meanwhile, in a case where the content operation detecting section 133d does not detect that the content that is to be displayed in the content display area 43 of the display section 40 is selected (NO in Step S206) and the switching operation detecting section 136d detects an instruction to switch an operation target to the menu or the content (Step S208), the switching operation detecting section 136d turns the menu selection detecting section 132 active (Step S210) in a case where the instruction is an instruction to switch to a menu operation (YES in Step S209). In a case where the instruction is an instruction to switch to a content operation (NO in Step S209), the switching operation detecting section 136d turns the content operation detecting section 133 active (Step S211).

### [Embodiment 5]

The present embodiment describes an embodiment in which, in addition to the above-described embodiments, a menu item is added and deleted by a user operation. Note that for convenience of explanation, the same reference signs are given to members having identical functions to members described in the above-described embodiments, and explanations thereof are omitted.

The present embodiment describes, as an example, a case where a menu is a text file describing menu items included in the menu in, for example, an XML format. However, the menu is not limited to this. When the menu is a text file such as an XML-format text file, the text file can be edited easily. That is, in the case of the text file, for example, a description of a new menu item can be easily added to the text file or an unnecessary menu item can be easily deleted from the text file.

For example, it is assumed that a menu display area 42 displays a menu that includes four menu items including "photos", "mails", "Net", and "news" and the menu is a text file that describes the four menu items. In this case, a predetermined description (e.g. a predetermined tag and a value of the tag) indicative of a menu item such as a "diary" can be easily added to the text file by a user operation. As a result, a menu that includes five menu items including "photos", "mails", "Net", "news", and "diary" can be displayed (not shown) in the menu display area 42.

For performing addition of a new menu item and deletion of an unnecessary menu item, a control section 10 (10b, 10c, and 10d) should be configured to further include a menu editing/setting section 129 (not shown) that carries out addition and deletion of a description of a menu item stored in a menu information storage section 22, in accordance with a user operation through the input operation section 60. Note that the description of the menu item that is to be newly added may be obtained from an external storage device such as a memory or a hard disk that stores in advance the menu item. Alternatively, the description of the menu item that is to be newly added may be obtained from an external device that is connected with a content display processing device 1 (16, 1c, and 1d) via a communications network.

It is also possible to provide a tag indicating whether or not each menu item is "active" and to determine whether or not to display each menu item according to a value of the tag, instead of adding or deleting a description of a menu item itself.

Further, a various data obtaining section 11 (11c) may obtain a text file of a whole menu in which the addition of the new menu item and the deletion of the unnecessary menu item have been performed, from an external storage device such as a memory or a hard disk, an external device such as an external server connected to the content display processing device 1 (1b, 1c, and 1d) via a communications network, or the like.

Note that as described above, the menu information storage section 22 does not necessarily be provided in the content display processing device 1 (1b, 1c, or 1d), but may be configured to be readably connected, as an external storage device such as a memory or a hard disk, to the content display processing device 1 (1b, 1c, or 1d). Further, the communications network for connecting the content display processing device 1 (1b, 1c, or 1d) is not specifically limited. Examples of the usable communications network include the Internet, intranet, extranet, LAN (Local Area Network), ISDN (Integrated Services Digital Network), VAN (Value Added Network), CATV (Cable TV) communications network, virtual private network, telephone line network, mobile communications network, and satellite communications network. Furthermore, a transmission medium that constitutes the communications network is also not specifically limited. Examples of the transmission medium include (i) wired lines such as an IEEE (Institute of Electrical and Electronics) 1394 cable, a USB (Universal Serial Bus) cable, power-line carrier, cable TV lines, telephone lines, and ADSL (Asymmetric Digital Subscriber Line) lines; and (ii) wireless connections, such as infrared light, for example, IrDA (Infrared Data Association), Bluetooth®, 802.11, HDR (High Data Rate), mobile telephone network, satellite connections, and terrestrial digital network.

When a new menu item is added, a user sets content information of one or more pieces of content and content display attribute information each of which are associated with the new menu item. The content information and the content display attribute information are set, for example, by associating an extension of a file including the content information of the one or more pieces of content and an extension of a file including the content display attribute information with identification information of the menu item. However, a method of setting the content information of the one or more pieces of content and the content display attribute information is not limited to this.

Note that when the new menu item is added (that is, a new menu item is added to the menu information storage section 22, or the various data information obtaining section 11 (11c) obtains a new menu item from an external device), the various data obtaining section 11 (11c) may be requested to obtain, from an external device, content information and content display attribute information that are to be associated with the new menu item in a case where the content information and the content display attribute information have not yet been obtained. In this case, a method for obtaining the content information and the content display attribute information (e.g. an external device from which the content information and the content display attribute information are obtained, or a communication protocol by use of which the content information and the content display attribute information are obtained) may be set in the various data obtaining section 11 (11c) by use of an internal file.

In the above case, the various data obtaining section 11 (11c) may obtain the content information that includes the content display attribute information (layout data). In such a case, the various data obtaining section 11 (11c) analyzes thus obtained content information so as to extract and obtain the content display attribute information (layout data). A method of analyzing the content information may be set in advance in the various data obtaining section 11 (11c) by use of an internal file.

Then, the various data obtaining section 11 (11c) stores thus obtained content information into a content information storage section 23 and thus obtained content display attribute information into a content display attribute storage section 24. While the various data obtaining section 11 (11c) stores or does not store the content information and the content display attribute information in a storage section 20, the various information obtaining section 11 (11c) may transfer the content information and the content display attribute information to a display data generating section 12 (12b, 12c).

Then, a menu generating section 122 (122c) obtains, from the menu information storage section 22 or the various data obtaining section 11 (11c), menu information in which the addition of a new menu item and the deletion of an unnecessary menu have been performed. Then, the menu generating section 122 (122c) generates, based on the menu information, a menu in which a user can make a selection, and displays thus generated menu in the menu display area 42. This makes it possible to display, in the menu display area 42, the menu in which the new menu item is added and from which the unnecessary menu item is deleted.

Then, in response to selection of thus added new menu item, content associated with thus added new menu item can be displayed in the content display area 43.

### [Additional Matters]

### (Menu Display Area And Content Display Area)

Each of the above-described embodiments includes one menu display area 42 and one content display area 43 in the display section 40. However, the configuration of the present invention is not limited to this. That is, the display section 40 may include a plurality of menu display areas for displaying a hierarchized menu and/or a plurality of areas for displaying content.

### (Modified Examples)

The embodiment of the present invention may be described as follows other then the description above.
[1] A content display processing device of the present invention being a menu display device in which an item can be selected from a plurality of items, the content display processing device may include, in addition to an input section, a selection control section, a screen generating section, and a screen display section, a detailed data obtaining section for obtaining detailed data regarding the item selected by use of the selection control section and a second screen generating section for generating a second screen in accordance with the obtained detailed data.
[2] The content display processing device of the present invention may further include a layout storage section storing a display method of the detailed data.
[3] In the content display processing device of the present invention, the layout storage section stores layout information that may be described in an XML format.
[4] The content display processing device of the present invention may further include a meta-information analyzing section for discriminating a data type included in the selected item, wherein the content display processing device may change display content in accordance with the data type.
[5] In the content display processing device of the present invention, the meta-information analyzing section may change the display content in accordance with the date and hour of creation or update of data that is to be displayed.
[6] In the content display processing device of the present invention, the meta-information analyzing section may change the display content in accordance with the number of pieces of data that is to be displayed.
[7] In the content display processing device of the present invention, the meta-information analyzing section may change the display content in accordance with the number of times the data has been displayed.
[8] The content display processing device of the present invention may change a color of a display frame of the second screen in accordance with contents determined by the meta-information analyzing section.
[9] The content display processing device of the present invention may change a design of the second screen in accordance with contents determined by the meta-information analyzing section.
[10] The content display processing device of the present invention may change a display area in regard to a display position and/or a size of the second screen, in accordance with contents determined by the meta-information analyzing section.
[11] The content display processing device of the present invention may change a draw engine for drawing the second screen in accordance with contents determined by the meta-information analyzing section.
[12] The content display processing device of the present invention may further include: a second selection control section for performing an operation on content displayed on the second screen; and an input control section for controlling whether a current input is directed to the first screen or the second screen.
[13] The content display processing device of the present invention may change an operation method for content displayed on the second screen in accordance with a data type.
[14] The content display processing device of the present invention may further include an update information obtaining section for obtaining update information of an item or data content.
[15] The content display processing device of the present invention may further include a communication section so as to obtain update information via the communication section from an external device.
[16] The content display processing device of the present invention may display accompanying information of an item or data content.
[17] In the content display processing device of the present invention, a selectable item can be added.
[18] The content display processing device of the present invention may obtain information of an additional item via an external storage device such as a memory card or a hard disk.
[19] The content display processing device of the present invention may further includes a communication device so as to obtain information of an additional item from an external device via the Internet, infrared communication, non-contact communication, or the like.
[20] The content display processing device of the present invention may be portable.
[21] The content display processing device of the present invention may be a television receiver.
[22] A content display processing method of the present invention being a display method of a menu that allows for selection of an item from a plurality of items, the content display processing method may include: an input step; a selection control step; a screen generation step; a screen display step; a detailed data obtaining step of obtaining detailed data regarding an item selected in the selection control step; and a second screen generation step of generating a second screen in accordance with the obtained detailed data.

### (Configuration of Control Section)

Each of the control sections 10, 10b, 10c, and 10d of the respective content display processing devices 1, 1b, 1c, and 1d may be constituted by hardware logic or may be realized by software by using a CPU. In a case where each of the control sections 10, 10b, 10c, and 10d is realized by software, each of the content display processing devices 1, 1b, 1c, and 1d includes a CPU (central processing unit) that executes the order of a control program for realizing functions, a ROM (read only memory) that stores the control program, a RAM (random access memory) that develops the control program in an executable form, and a storage device (storage medium), such as memory, that stores the control program and various types of data therein. The object of the present invention can be achieved by a predetermined storage medium. The storage medium stores, in a computer-readable manner, program codes (executable code program, intermediate code program, and source program) of the control program of each of the content display processing devices 1, 1b, 1c, and 1d of the present invention, which is software for realizing the aforesaid functions. The storage medium is provided to each of the content display processing devices 1, 1b, 1c, and 1d. With this arrangement, each of the content display processing devices 1, 1b, 1c, or 1d (alternatively, CPU or MPU) as a computer reads out and executes the program code stored in the storage medium provided.

The storage medium may be: tape based, such as a magnetic tape or cassette tape; disc based, such as a magnetic disk including a floppy® disc and hard disk, and optical disk including CD-ROM, MO, MD, DVD, and CD-R; card based, such as an IC card (including a memory card) and an optical card; or a semiconductor memory, such as a mask ROM, an EPROM, an EEPROM, and a flash ROM.

Further, each of the respective content display processing devices 1, 1b, 1c, and 1d of the present invention may be arranged so as to be connectable to a communications network so that the program code is supplied to each of the respective content display processing devices 1, 1b, 1c, and 1d through the communications network. The communications network is not to be particularly limited. Examples of the communications network include the Internet, intranet, extranet, LAN, ISDN, VAN, CATV communications network, virtual private network, telephone network, mobile communications network, and satellite communications network. Further, a transmission medium that constitutes the communications network is not particularly limited. Examples of the transmission medium include (i) wired lines such as an IEEE 1394 cable, a USB cable, a power-line carrier, cable TV lines, telephone lines, and ADSL lines and (ii) wireless connections such as IrDA using infrared light, Bluetooth®, 802.11, HDR, mobile phone network, satellite connections, and terrestrial digital network. Note that the present invention can be also realized by the program codes in the form of a computer data signal embedded in a carrier wave which is embodied by electronic transmission.

The present invention is not limited to the description of the embodiments above, but may be altered by a skilled person within the scope of the claims. An embodiment based on a proper combination of technical means disclosed in different embodiments is encompassed in the technical scope of the present invention.

As described above, a content display processing device of the present invention may be configured to further include: content display attribute information obtaining means obtaining display attribute information used when the one or more pieces of content are displayed, the display attribute information being associated with the menu item, wherein: the content display instruction means displays the one or more pieces of content in the second display area of the display section, in accordance with the display attribute information obtained for the one or more pieces of content.

According to the configuration, when a user selects any one of the menu items, it is possible to obtain display attribute information that is to be used in displaying content associated with thus selected menu item. Then, according to thus obtained display attribute information, the content can be displayed in the second display area.

Therefore, content is not displayed on the display section in a uniform layout, but can be displayed in a layout corresponding to display attribute information associated with a selected menu item.

Therefore, a user can view content in a layout corresponding to display attribute information set in advance. This improves visibility of the content for the user.

Further, the content display processing device of the present invention may be configured to further include: meta-information analyzing means analyzing meta-information of the one or more pieces of content associated with the menu item selected, wherein: the content display instruction means changes the display attribute information for every content and in accordance with a result of analyzing the meta-information, the display attribute information being obtained by the content display attributed information obtaining means, and displays the one or more pieces of content in the second display area of the display section in accordance with the display attribute information changed.

According to the configuration, when any one of the menu items is selected, meta-information of content associated with thus selected menu item can be analyzed. Then, display attribute information of the content can be changed in accordance with a result of the analysis. Subsequently, in accordance with the display attribute information thus changed, the content can be displayed in the second display area.

Therefore, the content is displayed on the display section not only in a layout in accordance with display attribute information associated with the selected menu item but also in a more suitable layout in accordance with meta-information of the content. For example, in a case where the date and hour of update of the content is included in meta-information of the content, a display color of the content can be changed in accordance with the date and hour of the update. Meanwhile, in a case where the number of pieces of display data is included in the meta-information of the content, a display position of the content can be appropriately changed in accordance with the number of pieces of the display data.

Therefore, a user can view content in a layout in accordance with meta-information. This makes it possible to further improve visibility of the content for the user.

Further, the content display processing device of the present invention may be configured to further include: meta-information analyzing means analyzing meta-information of the one or more pieces of content associated with the menu item, wherein: the content display instruction means changes the display attribute information for a background area in the second display area, and displays the one or more pieces of content in the second display area of the display section in accordance with the display attribute information changed, the background area being other than an area where the one or more pieces of content are displayed.

According to the configuration, it is possible to analyze meta-information of one or more pieces of content associated with the menu item. Then, in accordance with a result of the analysis, it is possible to change display attribute information of a background area in the second display area other than an area where the one or more pieces of content are displayed. Subsequently, in accordance with thus changed display attribute information of the background area, the one or more pieces of content can be displayed in the second display area of the display section.

Therefore, the background area other than the area where the one or more pieces of content are displayed can be displayed in a more suitable layout in accordance with the meta-information of the one or more pieces of content. For example, in a case where the meta information of the one or more pieces of content includes the date and hour of update, a display color of a display frame of the one or more pieces of content can be changed in accordance with the date and hour of the update or a design of the background area can be changed in accordance with the date and hour of the update. Meanwhile, in a case where the meta-information of the one or more pieces of content includes the number of pieces of display data included in the one or more pieces of content, a display position or a display size of the background area of the one or more pieces of content can be appropriately changed. Accordingly, a plurality of pieces of the display data can be displayed so that the display data can be easily viewed.

Therefore, a user can view content whose background is suitably changed in accordance with meta-information of the content. This can further improve visibility of the content for the user.

Further, the content display processing device of the present invention may be configured to further include: content update information obtaining means determining whether or not the one or more pieces of content are updated, based on information on update of the one or more pieces of content in the meta-information of the one or more pieces of content, wherein: the content display instruction means adds, to a piece of content determined to be updated, display data indicating that the piece of content is updated, and displays the piece of content in the second display area.

According to the configuration above, it is possible to determine whether or not the content is updated, based on information on update of the content in the meta-information of the content. Then, it is possible that display data indicating that the content is updated is added to the content that is determined to be updated, and the content is displayed in the second display area.

Therefore, it is possible to add, to updated content, display data indicating that the content is updated, and display the updated content.

Accordingly, a user can easily figure out which content is updated. This further improves visibility of the content for the user.

The content display processing device of the present invention may be configured to further include: content update information obtaining means determining whether or not the one or more pieces of content are updated, based on information on update of the one or more pieces of content in the meta-information of the one or more pieces of content, wherein: when the content update information obtaining means determines that the one or more pieces of content associated with the menu item selected are updated, the menu display instruction means adds, to the menu item selected, display data indicating that the one or more pieces of content are updated, and displays, in the first display area, the menu item selected.

According to the above configuration, whether or not the content is updated can be determined, based on the information concerning the update of the content in the meta-information of the content. Then, when one or more pieces of content associated with the selected menu item are determined to be updated, it is possible to add, to the selected menu item, display data indicating that the one or more pieces of content are updated and to display the selected menu item in the first display area.

Therefore, it is possible to add, to a menu item associated with updated content, display data that indicates that the content is updated and to display the menu item.

Accordingly, a user can easily figure out which menu item is associated with updated content. This makes it possible to further improve visibility of the content for the user.

Further, the content display processing device of the present invention may be configured to further include: meat-information analyzing means analyzing meta-information of the one or more pieces of content associated with the menu item; and operation control means changing control of a user input operation on the one or more pieces of content being displayed in the second display area, for every content and in accordance with a result of analyzing the meta-information.

According to the configuration, it is possible to analyze meta-information of one or more pieces of content associated with the menu item. Then, it becomes possible to change control of a user input operation on the one or more pieces of content that are displayed in the second display area, in accordance with a result of the analysis.

This makes it possible to more suitably control a user input operation on content displayed on the display section, in accordance with meta-information of the content.

Accordingly, a user input operation on the content can be performed in accordance with meta-information of the content, and operationality of the content can be improved.

Further, the content display processing device of the present invention may be configured to further includes: menu item setting means capable of adding a menu item as an object to be displayed in the first display area, wherein: the menu display instruction means displays, in the first display area, the plurality of user-selectable menu items including the additional menu item that is added.

According to the configuration above, to the menu items that are objects to be currently displayed in the first display area, an additional menu item associated with one or more pieces of content can added as another display object.

Therefore, a user can select the additional menu item and can view the one or more pieces of content associated with the additional menu item.

Therefore, menu items can be customized depending on a user, and operationality of a menu is improved.

Further, the content display processing device of the present invention may be configured to obtain a user-selectable menu item from an external storage device.

According to the above configuration, a menu item can be obtained from an external storage device.

Therefore, it is possible to obtain a menu item stored in an external storage device such as a memory card or a hard disk.

This makes it possible to obtain a menu item set in advance from an external storage device, and a menu can be customized depending on a user.

Further, the content display processing device of the present invention may be configured to obtain a user-selectable menu item from an external device connected via a communications network.

According to the configuration above, it is possible to obtain a menu item from an external device connected via a communications network.

Therefore, it is possible to obtain a menu item retained in an external server or the like connected via a communications network.

This makes it possible to obtain a menu item set in advance from an external device via a communications network, and a menu can be customized depending on a user.

Further, in the content display processing device of the present invention, it may be arranged such that: when the menu display instruction means detects the user selection, the content display instruction means generates display content for display in the second display area from the one or more pieces of content associated with the menu item selected and displays the display content in the second display area.

According to the configuration above, the content display instruction means generates display content from content associated with a menu item, and displays thus generated content in the second display area of the display section.

Therefore, it is possible to display the content without activating a dedicated application for display of the contents.

Note that the content display processing device can be realized by a compute. In such a case, the present invention encompasses a control program of the content display processing device for realizing the content display processing device with use of the computer by causing the computer to function as each means described above, and a computer-readable storage medium storing the control program.

### Industrial Applicability

The present invention can be suitably applied to a content display processing device for carrying out a content display process according to an operation on a menu by a user.

## Claims

1. A content display processing device comprising:
menu display instruction means displaying a plurality of user-selectable menu items in a first display area of a display section and detecting a user selection of a menu item from the plurality of user-selectable menu items displayed, the plurality of user-selectable menu items each being associated with one or more pieces of content; and
content display instruction means displaying, in a second display area of the display section, one or more pieces of content associated with the menu item selected, when the menu display instruction means detects the user selection.

2. The content display processing device as set forth in claim 1, further comprising:
content display attribute information obtaining means obtaining display attribute information used when the one or more pieces of content are displayed, the display attribute information being associated with the menu item, wherein:
the content display instruction means displays the one or more pieces of content in the second display area of the display section, in accordance with the display attribute information obtained for the one or more pieces of content.

3. The content display processing device as set forth in claim 2, further comprising:
meta-information analyzing means analyzing meta-information of the one or more pieces of content associated with the menu item selected, wherein:
the content display instruction means changes the display attribute information for every content and in accordance with a result of analyzing the meta-information, the display attribute information being obtained by the content display attributed information obtaining means, and displays the one or more pieces of content in the second display area of the display section in accordance with the display attribute information changed.

4. The content display processing device as set forth in claim 2, further comprising:
meta-information analyzing means analyzing meta-information of the one or more pieces of content associated with the menu item, wherein:
the content display instruction means changes the display attribute information for a background area in the second display area, and displays the one or more pieces of content in the second display area of the display section in accordance with the display attribute information changed, the background area being other than an area where the one or more pieces of content are displayed.

5. The content display processing device as set forth in any one of claims 1 through 4, further comprising:
content update information obtaining means determining whether or not the one or more pieces of content are updated, based on information on update of the one or more pieces of content in the meta-information of the one or more pieces of content, wherein:
the content display instruction means adds, to a piece of content determined to be updated, display data indicating that the piece of content is updated, and displays the piece of content in the second display area.

6. The content display processing device as set forth in any one of claims 1 to 4, further comprising:
content update information obtaining means determining whether or not the one or more pieces of content are updated, based on information on update of the one or more pieces of content in the meta-information of the one or more pieces of content, wherein:
when the content update information obtaining means determines that the one or more pieces of content associated with the menu item selected are updated, the menu display instruction means adds, to the menu item selected, display data indicating that the one or more pieces of content are updated, and displays, in the first display area, the menu item selected.

7. The content display processing device as set forth in any one of claims 1 through 6, further comprising:
meat-information analyzing means analyzing meta-information of the one or more pieces of content associated with the menu item; and
operation control means changing control of a user input operation on the one or more pieces of content being displayed in the second display area, for every content and in accordance with a result of analyzing the meta-information.

8. The content display processing device as set forth in any one of claims 1 through 7, further comprising:
menu item setting means capable of adding a menu item as an object to be displayed in the first display area, wherein:
the menu display instruction means displays, in the first display area, the plurality of user-selectable menu items including the menu item that is added.

9. The content display processing device as set froth in any one of claims 1 through 8, wherein:
a user-selectable menu item is obtained from an external storage device.

10. The content display processing device as set forth in any one of claims 1 through 8, wherein:
a user-selectable menu item is obtained from an external device connected via a communications network.

11. A content display processing method comprising:
a menu display and instruction step of displaying a plurality of user-selectable menu items in a first display area of a display section and detecting a user selection of a menu item from the plurality of user-selectable menu items displayed, the plurality of user-selectable menu items each being associated with one or more pieces of content; and
a content display and instruction step of displaying, in a second display area of the display section, one or more pieces of content associated with the menu item selected, when the menu display instruction means detects the user selection.

12. A content display processing program for causing a computer to function as the content display processing device as set forth in any one of claims 1 through 10, the content display processing program causing the computer to function as each means of the content display processing device.

13. The content display processing device as set forth in any one of claims 1 through 4, further comprising:
content update information obtaining means determining a length of a period from a date and hour of update of the one or more pieces of content, based on information on the update of the one or more pieces of content, the information being included in the meta-information of the one or more pieces of content, wherein:
the content display instruction means displays the one or more pieces of content in the second display area, in accordance with display attribute information indicating the length of the period determined by the content update information obtaining means.

14. The content display processing device as set forth in any one of claims 1 through 10, wherein:
when the menu display instruction means detects the user selection, the content display instruction means generates display content for display in the second display area from the one or more pieces of content associated with the menu item selected and displays the display content in the second display area.
